# EUROPEAN PATENT SPECIFICATION

(11) **EP 3 886 400 B1**
(45) Date of publication and mention of the grant of the patent: **04.12.2024**
(21) Application number: 20748143.3
(22) Date of filing: 15.01.2020
(51) Int. Cl.: H04L 67/12, H04L 67/02

(54) **UNMANNED AERIAL VEHICLE CONTROL METHOD, APPARATUS AND SYSTEM**
STEUERUNGSVERFAHREN FÜR UNBEMANNTES LUFTFAHRZEUG, VORRICHTUNG UND SYSTEM
PROCÉDÉ DE COMMANDE DE VÉHICULE AÉRIEN SANS PILOTE, APPAREIL ET SYSTÈME

(30) Priority: 02.02.2019 CN 201910107697
(43) Date of publication of application: 29.09.2021
(73) Proprietor: Huawei Technologies Co., Ltd., Shenzhen Guangdong 518129 (CN)
(72) Inventor: ZHANG, Chengchen, Shenzhen, Guangdong 518129 (CN); SHU, Lin, Shenzhen, Guangdong 518129 (CN); WU, Wenfu, Shenzhen, Guangdong 518129 (CN); ZONG, Zaifeng, Shenzhen, Guangdong 518129 (CN)
(74) Representative: Pfenning, Meinig & Partner mbB
(86) International application number: PCT/CN2020/072138
(87) International publication number: WO 2020/156157

(56) References cited:
- CN-A- 105 955 295
- CN-A- 105 955 295
- CN-A- 108 733 069
- CN-A- 108 781 379
- US-A1- 2016 161 258
- US-A1- 2016 371 987
- ZTE CORPORATION ET AL: "Use Case of Changing UAV controller", vol. SA WG1, 25 February 2019 (2019-02-25), XP051609532, Retrieved from the Internet <URL:http://www.3gpp.org/ftp/tsg%5Fsa/WG1%5FServ/TSGS1%5F85%5FTallin/Docs/S1%2D190272%2Ezip> [retrieved on 20190225]
- ZTE: "FS_EAV Changing UAV Controller", vol. SA WG1, no. SuZhou, China; 20190506 - 20190510, 29 April 2019 (2019-04-29), XP051718979, Retrieved from the Internet <URL:http://www.3gpp.org/ftp/tsg%5Fsa/WG1%5FServ/TSGS1%5F86%5FSuzhou/Docs/S1%2D191027%2Ezip> [retrieved on 20190429]

## Description

### TECHNICAL FIELD

This application relates to communications technologies, and in particular, to an unmanned aircraft vehicle (unmanned aerial vehicle, UAV) control method, apparatus, and system.

### BACKGROUND

With rapid development of electronic technologies and communications technologies, UAV-related technologies become more mature. A user can control a UAV in a plurality of different communications scenarios by operating a UAV controller. In a long-distance communications scenario, the controller may access a communications network provided by an operator and control the UAV by using the communications network.

In the conventional technology, a related unmanned aerial vehicle regulatory authority disposes an unmanned aerial vehicle traffic management (unmanned aerial vehicle traffic management, UTM) network element in a communications network, to monitor and identify a UAV that uses the communications network and a controller of the UAV. Therefore, regulation of the UAV that accesses the communications network and the controller of the UAV is performed by using the UTM.

However, in the conventional technology, there is no available solution for the UTM to enable and disable communication between the UAV that accesses the communications network and the controller of the UAV. Consequently, the UTM cannot interfere with the communication between the UAV and the controller of the UAV. Therefore, how to enable the UTM to manage the accessed UAV and the controller of the accessed UAV by using the communications network is a technical problem to be urgently resolved in this field.

CN 105 955 295A describes an unmanned plane control method that comprises steps that a control request is sent through a server to the second remote control equipment, the control request comprises the information of a target unmanned plane, and the target unmanned plane is controlled by the second remote control equipment; a permission control command sent by the second remote control equipment through the server is received; connection with the target unmanned plane is carried out according to the permission control command to realize control on the target unmanned plane.

US 2016/161258 A1 deals with trajectory planning for doing a handover of the control of a UAV: from a ground control station to a mobile control station.

### SUMMARY

### THE PRESENT INVENTION IS DEFINED BY THE INDEPENDENT CLAIMS. PARTICULAR EMBODIMENTS ARE SPECIFIED IN THE DEPENDENT CLAIMS. BRIEF DESCRIPTION OF DRAWINGS

FIG. 1 is a schematic diagram of an application scenario according to each embodiment of this application;
FIG. 2 is a schematic architectural diagram of an embodiment of a communications network according to this application;
FIG. 3 is a schematic architectural diagram of an embodiment of a communications network according to this application;
FIG. 4 is a schematic architectural diagram of an embodiment of a communications network according to this application;
FIG. 5 is a schematic flowchart of an embodiment of a UAV control method according to this application;
FIG. 6 is a schematic flowchart of an embodiment of a UAV control method according to this application;
FIG. 7 is a schematic flowchart of an embodiment of a UAV control method according to this application;
FIG. 8 is a schematic flowchart of an embodiment of a UAV control method according to this application;
FIG. 9 is a schematic flowchart of an embodiment of a UAV control method according to this application;
FIG. 10 is a schematic flowchart of an embodiment of a UAV control method according to this application;
FIG. 11 is a schematic flowchart of an embodiment of a UAV control method according to this application;
FIG. 12 is a schematic flowchart of an embodiment of a UAV control method according to this application;
FIG. 13 is a schematic flowchart of an embodiment of a UAV control method according to this application;
FIG. 14 is a schematic structural diagram of an embodiment of a UAV traffic management apparatus according to this application;
FIG. 15 is a schematic structural diagram of an embodiment of a communications apparatus according to this application;
FIG. 16 is a schematic structural diagram of an embodiment of a UAV control system according to this application;
FIG. 17 is a schematic structural diagram of an embodiment of a UAV control system according to this application; and
FIG. 18 is a schematic structural diagram of an embodiment of a UAV control system according to this application.

### DESCRIPTION OF EMBODIMENTS

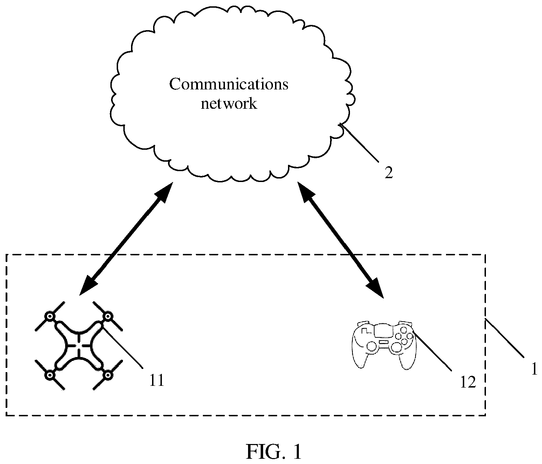

FIG. 1 is a schematic diagram of an application scenario according to each embodiment of this application. As shown in FIG. 1, each embodiment of this application is applied to an unmanned aircraft system (unmanned aerial system, UAS) 1, and the UAS 1 includes a UAV 11 and a UAV control device 12. The UAV control device 12 is configured to control the UAV 11, and the UAV control device 12 includes a smartphone, a tablet computer, a laptop computer, a dedicated UAV controller, or the like. For a short-distance control scenario, after establishing a connection relationship with the UAV 11 in a short-distance communication manner, for example, wireless fidelity (wireless fidelity, Wifi) or a Bluetooth low energy (bluetooth low energy, BLE) technology, the UAV control device 12 may control the UAV 11 by using the established connection relationship. However, for a long-distance control scenario, especially a non-line-of-sight control scenario, as shown in FIG. 1, to implement control of the UAV control device 12 on the UAV 11, the UAV 11 and the UAV control device 12 in the unmanned aircraft system 1 need to separately access a communications network 2, so that the UAV control device 12 can control the UAV 11 through the communications network 2. For example, a user of the UAV 11 may operate the UAV control device 12 to send a control signal to the UAV 11 through the communications network 2. Alternatively, the UAV 11 may send a status of the UAV 11 to the UAV control device 12 through the communications network 2.

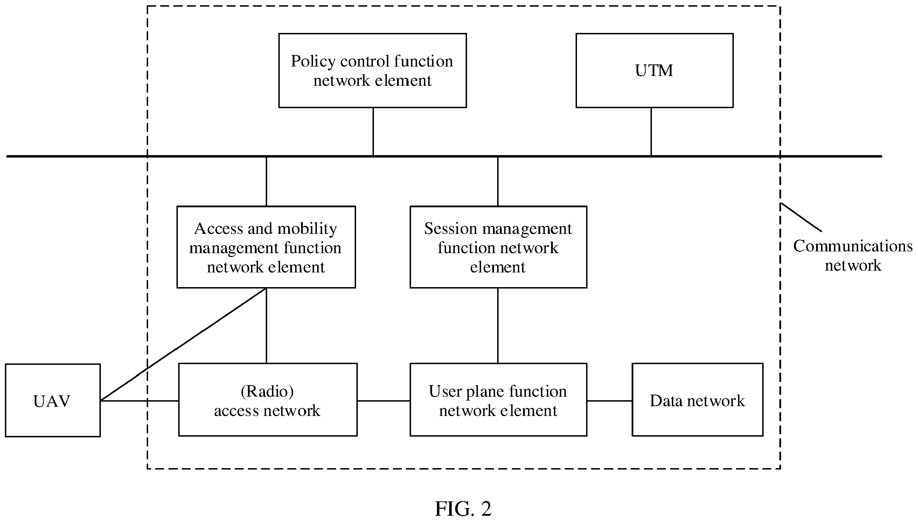

Optionally, the communications network 2 shown in FIG. 1 may be a communications network shown in FIG. 2. For example, FIG. 2 is a schematic architectural diagram of an embodiment of a wireless network according to this application. A communications system may be a 5th generation (5th generation, 5G) communications system, or may be another system. This is not limited in this application. An/a (radio) access network ((Radio) Access Network, (R) AN) is used by a UAV to access the communications system. An access and mobility management network element is used for functions such as mobility management, registration management, connection management, lawful interception, access authentication, and access authorization of a UAV. The access and mobility management network element may be an access and mobility management function (access and mobility management function, AMF) entity in the 5G communications system. A session management function network element is used for a session management function of the UAV, for example, functions such as session establishment, session modification, session release, and maintenance of a tunnel between a user plane function network element and an AN node. The session management function network element may be a session management function (session management function, SMF) entity in the 5G communications system. The user plane function network element is configured to connect to functions such as a PDU session point outside a data network, data table routing and forwarding, and a user plane part for policy rule execution. The user plane function network element may be a user plane function (user plane function, UPF) entity in the 5G communications system. A policy control function network element is configured to: support a unified policy framework in managing network behavior, provide a policy rule for a control plane network element, and the like. The policy control function network element may be a policy control function (policy control function, PCF) entity in the 5G communications system.

If the communications system shown in FIG. 2 is the 5G communications system, the UAV is connected to an/a (radio) access network through a radio interface. Data between the (radio) access network and the user plane function network element is transmitted through an N3 interface. Signaling and data between the (radio) access network and the access and mobility management function network element are transmitted through an N2 interface. Signaling and data between the access and mobility management function network element and a session management network element are transmitted through an N11 interface. Signaling and data between the session management network element and the user plane function network element are transmitted through an N4 interface. It should be noted that the radio interface, the N2 interface, the N3 interface, the N11 interface, and the N4 interface have been defined in the 5G communications system. Details are not described in this application.

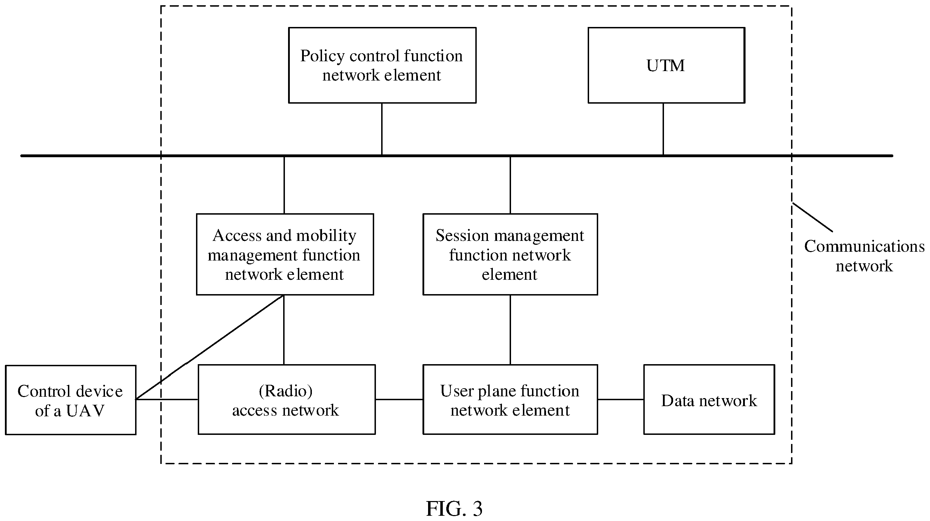

In addition, FIG. 3 is a schematic architectural diagram of an embodiment of a wireless network according to this application. In FIG. 3, a schematic architectural diagram of a communications network accessed by a UAV control device is shown. The communications network may alternatively be a 5G communications system, or may be another system. This is not limited in this application. A manner in which the UAV control device accesses the communications network shown in FIG. 3 and functions implemented by nodes in the communications network shown in FIG. 3 are the same as those shown in FIG. 2, and details are not described again.

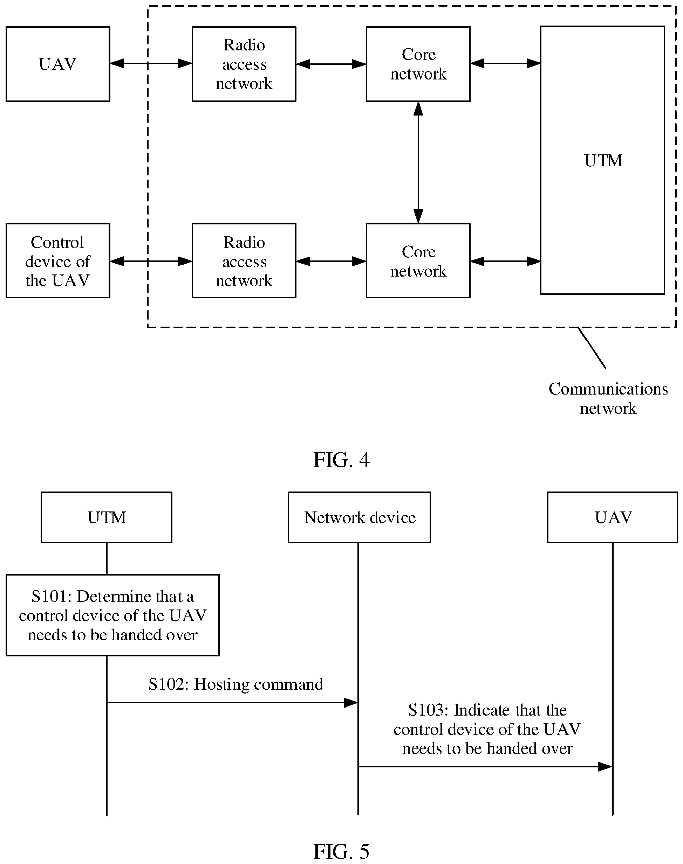

Alternatively, optionally, the communications network shown in FIG. 1 may be the communications system shown in FIG. 3. The communications system may be a 3rd generation partnership project (third generation partnership project, 3GPP) communications system, or may be another system. This is not limited in this application. For example, FIG. 4 is a schematic architectural diagram of an embodiment of a wireless network according to this application. In FIG. 4, a schematic diagram of a communications architecture of a communications system accessed by a UAV and a UAV control device is shown. The UAV and the UAV control device are respectively connected to a core network (core network, CN) through a radio access network.

It should be noted that the method and the apparatus provided in the embodiments of this application are described by using an example in which a communications network accessed by the UAV is the communications network shown in FIG. 2 and a communications network accessed by the UAV control device is the communications network shown in FIG. 3, but are not intended to limit the communications network. In addition to the examples of the communications systems shown in FIG. 2 to FIG. 4, the method and the apparatus provided in the embodiments of this application may be further applied to another communications system, for example, a global system for mobile communications (global system of mobile communication, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunication system, UMTS), a worldwide interoperability for microwave access (worldwide interoperability for microwave access, WiMAX) communications system, future new radio (new radio, NR), and the like.

Because the UAV 11 in the UAS 1 needs to occupy aviation airspace, a related unmanned aerial vehicle regulatory authority needs to monitor or identify the UAV 11 and the UAV control device 12 that use the communications network. An unmanned aerial vehicle traffic management (unmanned aerial vehicle traffic management, UTM) network element is disposed in some communications networks, to manage, by using the UTM, the UAV 11 and the UAV control device 12 that access the communications network 2. The UTM stores related data, for example, identification information, owner information, a current location, an operation state, and the like, of the UAV 11 and the UAV control device 12. The UTM may be configured to implement functions such as pairing the UAV 11 with the UAV control device 12, and identifying and authorizing control over the UAV 11 to the UAV control device 12. Optionally, the UTM may be a network element that performs a corresponding function in an existing communications network, or a network element that is newly disposed in an existing communications network and that performs a corresponding function.

For example, in the 5G communications system shown in FIG. 2, the UTM may be disposed in the 5G communications system, and perform pairing and identifying functions on the UAV by using the access and mobility management function network element and the session management function network element that are corresponding to the UAV. In the 5G communications system shown in FIG. 3, the UTM may also perform, by using an access and mobility management function network element and a session management function network element that are corresponding to the UAV control device, pairing and identifying functions on the UAV control device and a function of authorizing control over the UAV to the UAV control device. For another example, in the 3GPP communications system shown in FIG. 4, the UTM may be disposed in the 3GPP communications system, and performs pairing and identifying functions on the UAV by using a core network corresponding to the UAV. Alternatively, the UTM performs, by using a core network corresponding to the UAV control device, pairing and identifying functions on the UAV control device and a function of authorizing control over the UAV to the UAV control device.

In the conventional technology including the conventional technologies in FIG. 1 to FIG. 4, because there is no solution for managing, by the UTM, control rights of the UAV 11 and the UAV control device 12 that access the communications network 2, in some UAV control scenarios, if an operator of the communications network 2 or an unmanned aerial vehicle regulatory authority expects to forbid a user to control the UAV 11 by using the UAV control device 12 and expects that when the UTM hosts the UAV 11, both handover of the control device of the UAV 11 and release of the control right of the UAV control device 12 cannot be implemented by the UTM. Therefore, the UTM cannot control the UAV 11 and the UAV control device 12 through the communications network 2. Therefore, how to enable the UTM to control an accessed UAV and a control device of the UAV by using the communications network is a technical problem to be urgently resolved in this field.

The following describes a UAV control method provided in the embodiments of this application with reference to the accompanying drawings.

FIG. 5 is a schematic flowchart of an embodiment of a UAV control method according to this application. As shown in FIG. 5, an embodiment provides a method for indicating, by UTM to a UAV, that a control device of the UAV needs to be handed over, and the method includes the following steps.

S101: The UTM determines that the control device of the UAV needs to be handed over.

Specifically, the UTM first determines that the control device of the original UAV needs to be handed over. The control device of the UAV is configured to control the UAV.

Optionally, that the control device of the UAV needs to be handed over provided in this embodiment includes: The control device of the original UAV is handed over to a new control device, and the new control device controls the UAV, or the control device of the original UAV is handed over to the UTM, and the UTM performs hosting control on the UAV.

S102: The UTM sends a hosting command to a network device.

Specifically, after determining, in S 101, that the control device of the UAV needs to be handed over, the UTM sends the hosting command to the network device. The hosting command is used to indicate, to the network device, that the UAV needs to hand over the control device of the UAV. The hosting command includes indication information used for handing over the control device of the UAV and information about the UAV.

The indication information used for handing over the control device of the UAV in the hosting command is used by the network device to determine that the control device of the UAV needs to be handed over. The information about the UAV in the hosting command is used by the network device to determine the UAV whose control device needs to be handed over. The information about the UAV includes: address information of the UAV and/or identification information of the UAV.

Optionally, the hosting command provided in this embodiment may be a new information element included in a message sent by the UTM to the network device in the conventional technology. Alternatively, the hosting command may be a part of an existing information element in a message sent by the UTM to the network device in the conventional technology. Alternatively, the hosting command may be a new message or a new instruction sent by the UTM to the network device. This is not limited in this embodiment.

Optionally, the network device provided in this embodiment includes a network device corresponding to the UAV, and the network device corresponding to the UAV can manage communication between the UAV and the control device of the UAV. For example, the network device includes an SMF network element or an AMF network element corresponding to a UAV in a 5G communications system, or another network element in a core network corresponding to the UAV.

Further, in a possible implementation of the hosting command provided in this embodiment, the hosting command further includes information about a to-be-handed-over-to control device of the UAV, so that the network device can determine information about the control device of the UAV that needs to be handed over. The information that is about the to-be-handed-over-to control device of the UAV and that is carried in the hosting command is used to indicate information about that the original control device of the UAV is handed over to the to-be-handed-over-to control device of the UAV, and the information includes: address information or identification information of the to-be-handed-over-to control device of the UAV. Optionally, the information further includes address information of a user plane function network element corresponding to the to-be-handed-over-to control device of the UAV. The address information of the user plane function network element corresponding to the to-be-handed-over-to control device of the UAV is used by the network device to determine the user plane function network element corresponding to the control device that is of the UAV and to which the UAV is to hand over the control device.

However, in another possible implementation of the hosting command provided in this embodiment, if the hosting command sent by the UTM to the network device is used by the UTM to host the UAV, that is, the hosting command is used to hand over the control device of the UAV to the UTM, and when the network device receives the hosting command and subsequently indicates to the UAV that the control device of the UAV needs to be handed over, the network device and the UAV can determine information about the UTM. Therefore, the hosting command may not include the information about the UTM.

S103: The network device indicates, according to the hosting command, that the UAV needs to hand over the control device of the UAV.

Specifically, after the network device receives the hosting command sent by the UTM, the network device indicates, according to the hosting command, that the UAV needs to hand over the control device of the UAV.

In a possible implementation of this step, the network device indicates, by sending a handover command to the UAV, that the UAV needs to hand over the control device of the UAV. The handover command includes the indication information used for handing over the control device of the UAV and/or the information about the to-be-handed-over-to control device of the UAV. The handover command sent by the network device to the UAV may be included in a message sent by an existing network device to the UAV. Alternatively, the handover command is a new message sent by the network device to the UAV.

Optionally, the handover command may include all or some elements in the hosting command received by the network device. For example, the hosting command is included, in a form of an information element, in the handover command sent by the network device to the UAV. Alternatively, the network device adds the handover command to an existing message, and sends the existing message to the UAV.

After the network device indicates, according to the hosting command, that the UAV needs to hand over the control device of the UAV, the UAV modifies, based on the received handover command, the information about the original control device stored in the UAV to the information about the to-be-handed-over-to control device of the UAV, so that the UAV can hand over the control device of the UAV. In particular, if the to-be-handed-over-to control device of the UAV is the UTM, after the UAV modifies the information about the original control device stored in the UAV to the information about the UTM, the UTM can manage the UAV. Finally, after completing modification of the information about the original control device, the UAV stops sending any signaling or data to the original control device, and stop receiving any signaling or data from the original control device.

Optionally, after S103 is performed, if the network device determines that the control device of the UAV has been handed over, the network device sends a hosting command response to the UTM. The hosting command response is used to indicate, to the UTM, that handover of the control device of the UAV has been completed.

Optionally, the hosting command response provided in this embodiment may be a new information element included in a message in the conventional technology. Alternatively, the hosting command response may be a part of an existing information element in a message in the conventional technology. Alternatively, the hosting command response may be a new message or a new instruction. This is not limited in this embodiment.

In conclusion, according to the UAV control method provided in this embodiment, the hosting command is sent to the network device by using the UTM, and the network device indicates, according to the hosting command, that the UAV needs to hand over the control device of the UAV, thereby implementing handover of the control device of the UAV. In particular, when the UTM may indicate, according to the hosting command, that a to-be-handed-over-to control device of the UAV is the UTM, it can be implemented that the UTM indicates the UAV to accept hosting of the UTM, thereby clarifying control of the UTM over a UAV accessing a communications network. Finally, the UTM can control the accessed UAV through the communications network.

Optionally, in a possible implementation of this embodiment, the UTM directly sends the hosting command to the UAV. Content and a form of the hosting command are consistent with content and a form of the hosting command described in the foregoing process, and details are not described herein again. If the UAV receives the hosting command sent by the UTM, the UAV modifies, based on the received hosting command, the information about the original control device stored in the UAV to the information about the to-be-handed-over-to control device of the UAV, and sends a PDU session modification request to the SMF network element. In this way, the SMF network element modifies a PDU session of the UAV through an N4 interface of the UPF network element based on the PDU session modification request, so that the UAV can hand over the control device of the UAV.

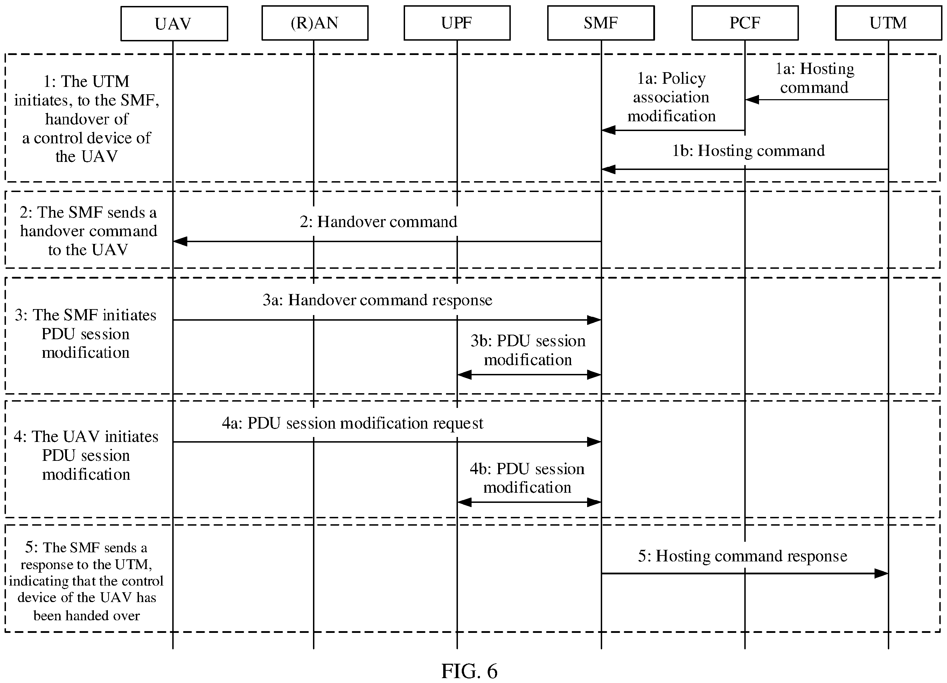

Further, on the basis of the embodiment of the UAV control method shown in FIG. 5, this application further provides a specific implementation when the method is applied to a 5G communications system and the network device is a session management function network element corresponding to the UAV. The session management function network element may be an SMF network element in the 5G communications system. The following provides description with reference to FIG. 6. FIG. 6 is a schematic flowchart of an embodiment of a UAV control method according to this application. For the UAV shown in FIG. 6, network elements in the 5G communications system, and connection relationships between the network elements, refer to FIG. 2.
1: The UTM initiates, to the SMF network element, handover of the control device of the UAV.

In a specific implementation 1a, the UTM may initiate handover of the control device of the UAV by sending the hosting command to a policy control function network element corresponding to the UAV. The policy control function network element may be a PCF network element in the 5G communications system. After receiving the hosting command, the PCF network element sends the hosting command to the SMF network element by modifying a session management policy.

In another specific implementation 1b, the UTM may directly send the hosting command to the SMF network element corresponding to the UAV.

2: The SMF network element sends the handover command to the UAV.

Specifically, when the SMF network element receives, by using 1a, the hosting command sent by the PCF network element, or after the SMF network element receives, by using 1b, the hosting command sent by the UTM, the SMF network element sends the handover command to the UAV.

After receiving the handover command sent by the SMF in step 2, the UAV determines that the control device of the UAV needs to be handed over, and modifies the information about the original control device of the UAV stored in the UAV to the information that is about the to-be-handed-over-to control device of the UAV and that is indicated by the handover command. The information about the control device of the UAV includes: the address information and/or the identification information.

3: The SMF initiates a protocol data unit (protocol data unit, PDU) session modification.

Optionally, after step 1 is performed, in step 3 in this embodiment, after receiving the hosting command, the SMF network element may initiate modification of a detection rule and/or a forwarding rule that are/is of the original control device of the UAV and that are/is in a UPF corresponding to the UAV. Specifically, after the SMF network element sends the handover command to the UAV to indicate that the control device of the UAV needs to be handed over, in step 3a, the UAV sends a handover command response to the SMF network element, to confirm, with the SMF network element, that the information about the control device has been handed over. Optionally, the handover command may be included in an existing information element or a new information element in a PDU session modification command. The handover command response may be a PDU session modification command response, or may be included in an existing information element or a new information element in the PDU session modification command response. The handover command and the handover command response may also be of a new message type, and forms of the handover command and the handover command response are not limited in the present application. The modified PDU session is used for communication between the UAV and the control device of the UAV.

After receiving the handover command response sent by the UAV, in step 3b, the SMF network element modifies the PDU session of the UAV through the N4 interface of the UPF network element. That the PDU session is modified specifically includes: After determining structured control information according to the hosting command, the SMF sends the structured control information to a user plane function network element corresponding to the UAV. The structured control information is used to indicate to modify, to the information about the to-be-handed-over-to control device of the UAV, the information about the control device of the UAV in the detection rule and/or the forwarding rule in the UPF network element corresponding to the UAV; and/or the structured control information is further used to indicate to modify, to the address information of the user plane function network element of the to-be-handed-over-to control device of the UAV, the address information of the user plane function network element corresponding to the control device of the UAV in the detection rule and/or the forwarding rule in the UPF network element corresponding to the UAV.

4: The UAV initiates PDU session modification.

Alternatively, if the SMF sends the handover command to the UAV in step 2, in this embodiment, the UAV may initiate modification of the PDU session in step 4. Specifically, after the SMF network element sends the handover command to the UAV to indicate that the control device of the UAV needs to be handed over, in step 4a, the UAV initiates PDU session modification request to the SMF network element, to request to modify the PDU session used for the communication between the UAV and the control device of the UAV. The PDU session modification request includes the information about the to-be-handed-over-to control device of the UAV.

After receiving the PDU session modification request initiated by the UAV, in step 4b, the SMF network element modifies the PDU session of the UAV through the N4 interface of the UPF network element. That the PDU session is modified specifically includes: After determining the structured control information based on the PDU session modification request, the SMF sends the structured control information to the user plane function network element corresponding to the UAV. The structured control information is used to indicate to modify, to the information about the to-be-handed-over-to control device of the UAV, the information about the control device of the UAV in the detection rule and/or the forwarding rule in the UPF network element corresponding to the UAV; and/or the structured control information is further used to indicate to modify, to the address information of the user plane function network element of the to-be-handed-over-to control device of the UAV, the address information of the user plane function network element corresponding to the control device of the UAV in the detection rule and/or the forwarding rule in the UPF network element corresponding to the UAV.

5. The SMF sends a response to the UTM, indicating that the control device of the UAV has been handed over.

Specifically, after completing the PDU session modification by using step 3b or step 4b or after determining that the control device of the UAV has been handed over, the SMF network element sends the hosting command response to the UTM, to confirm that the UAV has completed the handover of the control device of the UAV. Subsequently, when the handover of the control device of the UAV is completed, the to-be-handed-over-to control device of the UAV can control the UAV.

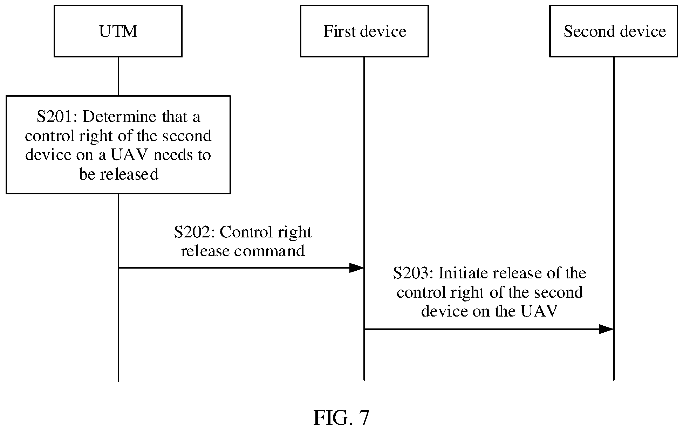

FIG. 7 is a schematic flowchart of an embodiment of a UAV control method according to this application. The embodiment shown in FIG. 7 provides a method for indicating, by UTM, a first device to initiate release of a control right of a second device on a UAV. The embodiment shown in FIG. 7 can be executed independently, or the embodiment shown in FIG. 7 may be executed after the UTM indicates that the handover of the control device of the UAV is performed in FIG. 6. In other words, the UTM first indicates the UAV to perform handover of the control device, and after determining that the UAV has completed the handover of the control device of the UAV, the UTM indicates the original control device of the UAV to release the control right on the UAV. In this way, the original control device of the UAV is the second device in this embodiment. As shown in FIG. 7, a UAV control method provided in this embodiment includes the following steps.

S201: The UTM determines that the control right of the second device on the UAV needs to be released.

Specifically, the UTM first determines that the control right of the second device on the UAV needs to be released. The second device is a device configured to control the UAV at this time.

Optionally, after receiving the hosting command response in the embodiment shown in FIG. 6, the UTM determines that the control right of the second device configured to control the UAV at this time needs to be released.

S202: The UTM sends a control right release command to the first device.

Specifically, after determining, in S201, that the control right of the second device on the UAV needs to be released, the UTM sends the control right release command to the first device. The control right release command is used to release the control right of the second device on the UAV. The control right release command includes: indication information used for releasing the control right of the second device on the UAV and information about the UAV.

The indication information used for releasing the control right of the second device on the UAV in the control right release command is used by a network device to determine that the control right of the second device on the UAV needs to be released. The information about the UAV in the control right release command is used by the first device to determine that the UAV corresponding to the control right specifically released by the second device needs to be released.

Optionally, the control right release command provided in this embodiment may be a new information element included in a message sent by the UTM to the second device in the conventional technology. Alternatively, the control right release command may be a part of an existing information element in a message sent by the UTM to the second device in the conventional technology. Alternatively, the control right release command may be a new message or a new instruction sent by the UTM to the second device. This is not limited in this embodiment.

Optionally, the control right release command further includes a reason for releasing the control right of the second device on the UAV and/or information about the second device. The reason for releasing the control right of the second device on the UAV is used to enable the first device to determine the reason for releasing the control right of the second device on the UAV, and the information about the second device is used by the first device to determine that the second device having the control right on the UAV needs to be released.

Optionally, the control right release command further includes duration for releasing the control right of the second device on the UAV. The duration for releasing the control right of the second device on the UAV is used to: after the second device releases the control right on the UAV, that is, after the duration, the second device may re-request to the UTM to establish the control right of the second device on the UAV.

S203: The first device initiates release of the control right of the second device on the UAV.

Specifically, after receiving the control right release command sent by the UTM, the first device initiates release of the control right of the second device on the UAV based on the control right release command.

Optionally, after S203 is performed, if the first device determines that the control right of the second device on the UAV has been released, the first device sends a control right release command response to the UTM. The control right release command response is used to indicate that the control right of the second device on the UAV has been released.

Optionally, the control right release command response provided in this embodiment may be a new information element included in a message in the conventional technology. Alternatively, the control right release command response may be a part of an existing information element in a message in the conventional technology. Alternatively, the control right release command response may be a new message or a new instruction. This is not limited in this embodiment.

Further, with reference to FIG. 5 and FIG. 7, the UTM may first host the UAV by using the embodiment in FIG. 5, and then the UTM releases, by using the embodiment in FIG. 7, the second device that controls the UAV, to prevent the second device from controlling the UAV and enable the UTM or another control device to host the UAV. Then, the UTM may notify an operator or an unmanned aerial vehicle regulatory authority that the second device has been prevented from controlling the UAV.

In conclusion, according to the UAV control method provided in this embodiment, the UTM sends the control right release command to the first device, and the first device initiates release of the control right of the second device on the UAV, thereby implementing the release of the control right of the control device on the UAV. Therefore, in this embodiment, the control right of the UTM on the control device of the UAV is released, thereby clarifying control of the UTM over a control device of a UAV accessing a communications network, and finally implementing that the UTM can control the control device of the UAV accessing the communications network by using the communications network.

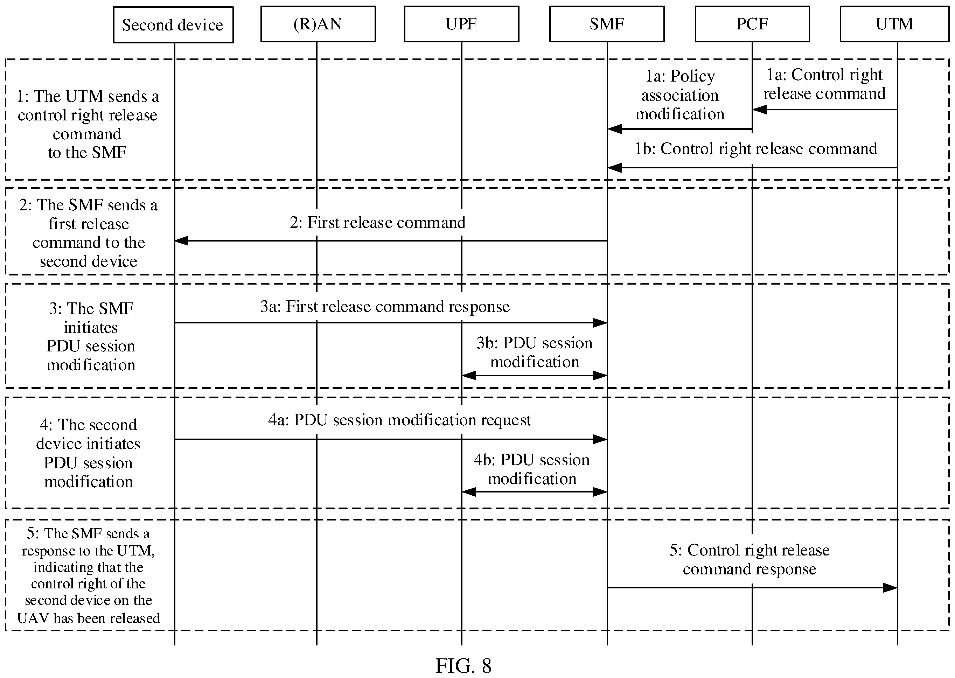

Further, in the embodiment shown in FIG. 7, after determining to release the control right of the second device on the UAV, the UTM may send the control right release command to the first device, and the first device initiates release of the control right of the second device on the UAV. In the UAV control method provided in this embodiment, the first device may be the second device, a session management function network element corresponding to the second device, or an access and mobility management function network element corresponding to the second device. The session management function network element may be an SMF network element in a 5G communications system, and the access and mobility management function network element may be an AMF network element in the 5G communications system. With reference to FIG. 8 to FIG. 10, the following describes an embodiment in which the UTM sends the control right release command to different first devices separately.

FIG. 8 is a schematic flowchart of an embodiment of a UAV control method according to this application. As shown in FIG. 8, after determining to release the control right of the second device on the UAV, the UTM sends the control right release command to the SMF network element, and the SMF network element initiates a procedure of releasing the control right of the second device on the UAV. In the embodiment shown in FIG. 8, an example in which the second device is the control device of the UAV and the first device is a session function management network element corresponding to the second device is used for description. For the control device of the UAV, network elements in the 5G communications system, and connection relationships between the network elements, refer to FIG. 3.
1: The UTM sends the control right release command to the SMF network element.

In a specific implementation 1a, the UTM may send the control right release command to the SMF by sending the control right release command to a policy control function network element corresponding to the second device. The policy control function network element may be a PCF network element in the 5G communications system. After receiving the control right release command, the PCF network element sends the control right release command to the SMF network element by modifying a session management policy or terminating a session management policy.

In a specific implementation 1b, the UTM may directly send the control right release command to the SMF network element corresponding to the second device.

2: The SMF network element sends the control right release command to the second device.

Specifically, after receiving, in step 1, the control right release command sent by the UTM, the SMF network element sends a first release command to the UAV by using step 2. The first release command is used to indicate the second device to release the control right on the UAV.

Optionally, the first release command may include all or some elements in the control right release command received by the SMF network element, or the first release command may include the control right release command. For example, the control right release command is included in the first release command in a form of an information element. Optionally, the first release command includes the indication information used for releasing the control right of the second device on the UAV and the information about the UAV. Further, the first release command further includes a reason for releasing the control right of the second device on the UAV.

After receiving the first release command sent by the SMF in step 2, the second device determines that the second device needs to release the control right of the second device on the UAV, and deletes the information that is about the UAV and that is stored in the second device. The information about the UAV includes address information and/or identification information.

3: The SMF initiates PDU session modification or release.

Optionally, after step 1 is performed, after receiving the control right release command, the SMF network element initiates modification of a detection rule and/or a forwarding rule that are/is of the UAV controlled by the second device and that are/is recorded in a UPF corresponding to the second device. Specifically, after the SMF network element sends the first release command to the second device, in step 3a, the second device sends a first release command response to the SMF network element, to determine, from the SMF network element, that the control right of the second device on the UAV has been released. Optionally, the first release command may be included in an existing information element or a new information element in a PDU session modification command. The first release command response may be a PDU session modification command response, or may be included in an existing information element or a new information element in the PDU session modification command response. The first release command and the first release command response may also be of a new message type. Forms of the first release command and the first release command response are not limited in the present application. A modified PDU session is used by the second device to control the UAV.

After receiving the first release command response, in step 3b, the SMF network element modifies the PDU session of the second device through an N4 interface of a UPF network element. The PDU session modification initiated by the SMF network element specifically includes the following two possible specific implementations.

In a possible specific implementation, if the PDU session used by the second device to communicate with the UAV is not used by the second device to control only the UAV, in other words, the second device may further control another UAV by using the PDU session, after receiving the first release command response, the SMF network element modifies only the PDU session used by the second device to control the UAV. The SMF network element specifically deletes, through the N4 interface of the UPF network element, information that is used by the second device to control the UAV and that is in the PDU session of the UPF network element. Specifically, after determining structured control information based on the control right release command, the SMF network element sends the structured control information to the UPF network element. The structured control information is used to indicate the UPF network element to delete information that is in the detection rule and/or the forwarding rule and that is used by the second device to control the UAV. Finally, after the SMF network element deletes, from the PDU session in the UPF network element, the information used by the second device to control the UAV, the second device cannot continue to control the UAV by using the PDU session.

In the other possible specific implementation, if the PDU session used by the second device to communicate with the UAV is used by the second device to control only the UAV and/or the second device is used to control only the UAV, after receiving the first release command response, the SMF network element may directly release the PDU session used by the second device to control the UAV. The SMF network element specifically releases, through the N4 interface of the UPF network element, the PDU session that is used by the second device to control the UAV and that is in the UPF network element. Specifically, the SMF network element sends, according to the control right release command, a session release request to the UPF network element corresponding to the second device. The session release request is used to indicate the UPF network element to release a session context used by the second device to control the UAV. Finally, after the SMF network element releases the PDU session that is used by the second device to control the UAV and that is in the UPF network element, the second device cannot continue to control the UAV by using the PDU session.

4: The second device initiates PDU session modification or release.

Alternatively, optionally, if the SMF sends the first release command to the second device in step 1, the second device may initiate PDU session modification or release in step 4 in this embodiment. Specifically, after the SMF network element sends the first release command to the second device, in step 4a, the second device initiates a PDU session modification request to the SMF network element, to request to modify the PDU session used by the second device to control the UAV. Subsequently, in step 4b, the SMF network element performs, based on the PDU session modification request sent by the second device, PDU session modification of the second device through the N4 interface of the UPF network element. The PDU session modification initiated by the second device specifically includes the following two possible specific implementations.

In a possible specific implementation, if the PDU session used by the second device to communicate with the UAV is not used by the second device to control only the UAV, in other words, the second device may further control another UAV by using the PDU session, the PDU session modification request sent by the second device to the SMF network element is used to indicate to modify the PDU session. In this case, after receiving the PDU session modification request, the SMF network element modifies only the PDU session used by the second device to control the UAV. The SMF network element specifically deletes, through the N4 interface of the UPF network element, the information that is used by the second device to control the UAV and that is in the PDU session of the UPF network element. Specifically, after determining the structured control information based on the PDU session modification request, the SMF network element sends the structured control information to the UPF network element. The structured control information is used to indicate the UPF network element to delete the information that is in the detection rule and/or the forwarding rule and that is used by the second device to control the UAV. Finally, after the SMF network element deletes, from the PDU session in the UPF network element, the information used by the second device to control the UAV, the second device cannot continue to control the UAV by using the PDU session.

In the other possible implementation, if the PDU session used by the second device to communicate with the UAV is used by the second device to control only the UAV and/or the second device is used to control only the UAV, the PDU session modification request sent by the second device to the SMF network element is used to indicate to release the PDU session. In this case, after receiving the PDU session modification request, the SMF network element may release, based on the PDU session modification request, the PDU session used by the second device to control the UAV. The SMF network element specifically releases, through the N4 interface of the UPF network element, the PDU session that is used by the second device to control the UAV and that is in the UPF network element. Specifically, the SMF network element sends, based on a PDU session release request, the session release request to the UPF network element corresponding to the second device. The session release request is used to indicate the UPF network element to release the session context used by the second device to control the UAV. Finally, after the SMF network element releases the PDU session that is used by the second device to control the UAV and that is in the UPF network element, the second device cannot continue to control the UAV by using the PDU session.

5: The SMF sends a response to the UTM, indicating that the control right of the second device on the UAV has been released.

Specifically, after completing the PDU session modification by using step 3b or step 4b or after determining that the control right of the second device on the UAV has been released, the SMF network element sends the control right release command response to the UTM, to confirm that the release of the control right of the second device on the UAV has been completed. After the release of the control right of the second device on the UAV is completed, the second device can no longer continue to control the UAV.

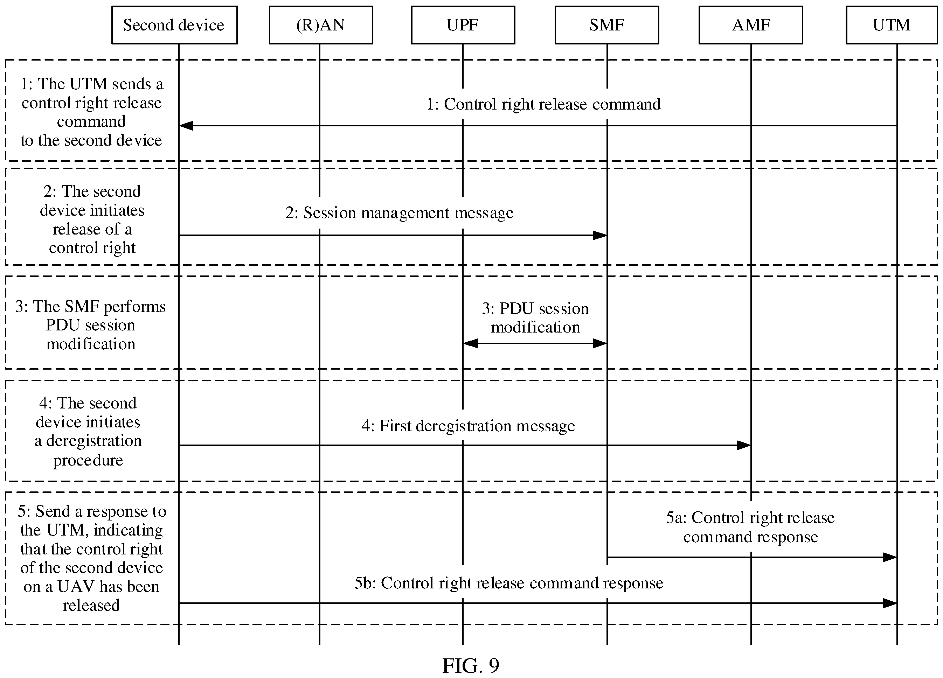

FIG. 9 is a schematic flowchart of an embodiment of a UAV control method according to this application. As shown in FIG. 9, after determining the control right of the second device on the UAV, the UTM directly sends the control right release command to the second device, and the second device initiates a procedure of releasing the control right of the second device on the UAV. In the embodiment shown in FIG. 9, an example in which the second device and the first device are a same device and the second device is the control device of the UAV is used for description. For the control device of the UAV, network elements in the 5G communications system, and connection relationships between the network elements, refer to FIG. 3.
1: The UTM sends the control right release command to the second device.
   The UTM directly sends the control right release command to the second device. The command may be implemented by using a new message type between the UTM and the second device.
2: The second device sends a control right release request to the SMF.
   Specifically, after receiving the control right release command sent by the UTM, the second device determines that the second device needs to release the control right of the second device on the UAV, and initiates release of the control right of the second device on the UAV. For example, the second device may first delete the information that is about the UAV and that is stored in the second device, and then send a session management message to the SMF network element corresponding to the second device. The session management message is used to indicate the SMF network element to modify or release a context used by the second device to control the UAV.
3: The SMF performs PDU session modification or release.
   After the SMF network element receives the session management message sent by the second device, the SMF network element indicates a UPF network element corresponding to the second device to modify or release a PDU session that is used by the second device to control the UAV. The SMF network element modifies or releases, by using the UPF network element corresponding to the second device based on the session management message, the context used by the second device to control the UAV. Therefore, the second device cannot continue to control the UAV by using the PDU session.
4: The second device initiates a deregistration procedure.

Specifically, the second device requests, to the AMF network element by sending a first deregistration message to the AMF network element corresponding to the second device, to initiate deregistration of the second device.

Optionally, after performing steps 1 to 3 in FIG. 9, the second device may perform step 4 to initiate deregistration. Alternatively, after receiving the control right release command in step 1, the second device may directly perform step 4 to initiate deregistration.

Optionally, before initiating the deregistration procedure, the second device further needs to determine whether the second device is configured to control only the UAV. If it is determined that the second device is configured to control only a UAV whose control right needs to be released, the second device may directly initiate the deregistration procedure after receiving the control right release command.

5: The second device sends a response to the UTM, indicating that the control right of the second device on the UAV has been released.

In a specific implementation 5a, after completing the PDU session modification by using step 3 or after determining that the control right of the second device on the UAV has been released, the SMF network element sends the control right release command response to the UTM, to confirm that the release of the control right of the second device on the UAV has been completed.

In a specific implementation 5b, after completing the deregistration by using step 4 or after determining that the control right of the second device on the UAV has been released, the second device may send the control right release command response to the UTM, to confirm that the release of the control right of the second device on the UAV has been completed.

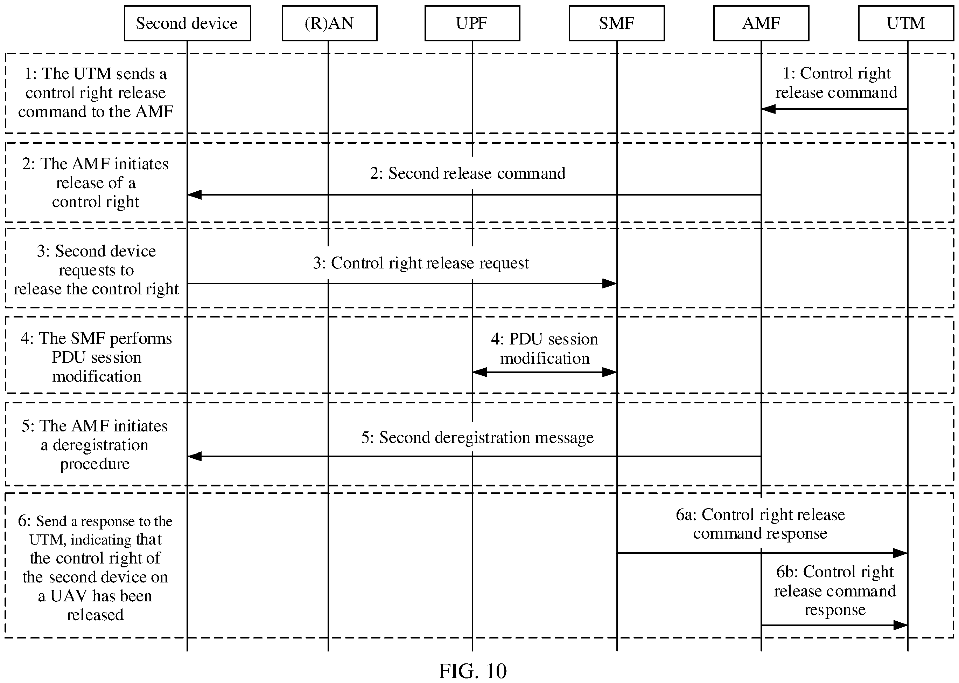

FIG. 10 is a schematic flowchart of an embodiment of a UAV control method according to this application. As shown in FIG. 10, after determining the control right of the second device on the UAV, the UTM sends the control right release command to the AMF network element corresponding to the second device, and the AMF network element initiates a procedure of releasing the control right of the second device on the UAV. In the embodiment shown in FIG. 10, an example in which the second device is the control device of the UAV and the first device is an access and mobility management function network element corresponding to the second device is used for description. For the control device of the UAV, network elements in the 5G communications system, and connection relationships between the network elements, refer to FIG. 3.
1: The UTM sends the control right release command to the AMF network element.
   After determining that the control right of the second device on the UAV needs to be released, the UTM may send the control right release command to the AMF network element, so that the AMF network element initiates release of the control right of the second device on the UAV. The control right release command may be implemented by using a new message type between the UTM and the second device, or the control right release command may be included in an existing message between the UTM and the second device.
2: The AMF network element sends a second release command to the second device, where the second release command is used to indicate the second device to release the control right on the UAV.
   Optionally, after receiving the control right release command sent by the UTM, the AMF network element sends the second release command to the second device according to the control right release command. The second release command is used to indicate the second device to release the control right on the UAV. Optionally, the second release command includes the indication information used for releasing the control right of the second device on the UAV and the information about the UAV. Further, the second release command further includes a reason for releasing the control right of the second device on the UAV. Optionally, the second release command may be included in a configuration update command sent by the AMF network element to the second device, or the second release command may be a new command sent by the AMF network element to the second device. The second release command may include all or some elements in the control right release command received by the AMF network element, or the configuration update command includes the control right release command. For example, the control right release command is included in the configuration update command in a form of an information element.
3: The second device requests, to the SMF, to release the control right.
   Specifically, after receiving the control right release command sent by the UTM, the second device determines that the second device needs to release the control right of the second device on the UAV, and initiates release of the control right of the second device on the UAV.
4: The SMF performs PDU session modification.
   For steps 3 and 4 in the embodiment shown in FIG. 10, refer to steps 2 and 3 in the embodiment shown in FIG. 9. Implementations and principles of steps 3 and 4 are the same as those of steps 2 and 3, and details are not described again.
5: The AMF network element initiates a deregistration procedure.

Specifically, the AMF network element initiates deregistration of the second device by sending a second deregistration message to the second device.

Optionally, after performing steps 1 to 4 in FIG. 10, the AMF network element may perform step 5 to initiate deregistration. Alternatively, after receiving the control right release command in step 1, the AMF network element may directly perform step 5 to initiate deregistration.

Optionally, before initiating the deregistration procedure, the AMF network element further needs to determine whether the second device is configured to control only the UAV. If it is determined that the second device is configured to control only a UAV whose control right needs to be released, the AMF network element may directly initiate the deregistration procedure on the second device after receiving the control right release command.

6: The second device sends a response to the UTM, indicating that the control right of the second device on the UAV has been released.

In a specific implementation 6a, after completing the PDU session modification by using step 4 or after determining that the control right of the second device on the UAV has been released, the SMF network element sends the control right release command response to the UTM, to confirm that the release of the control right of the second device on the UAV has been completed.

In a specific implementation 6b, after completing the deregistration by using step 5 or after determining that the control right of the second device on the UAV has been released, the AMF network element may send the control right release command response to the UTM, to confirm that the release of the control right of the second device on the UAV has been completed.

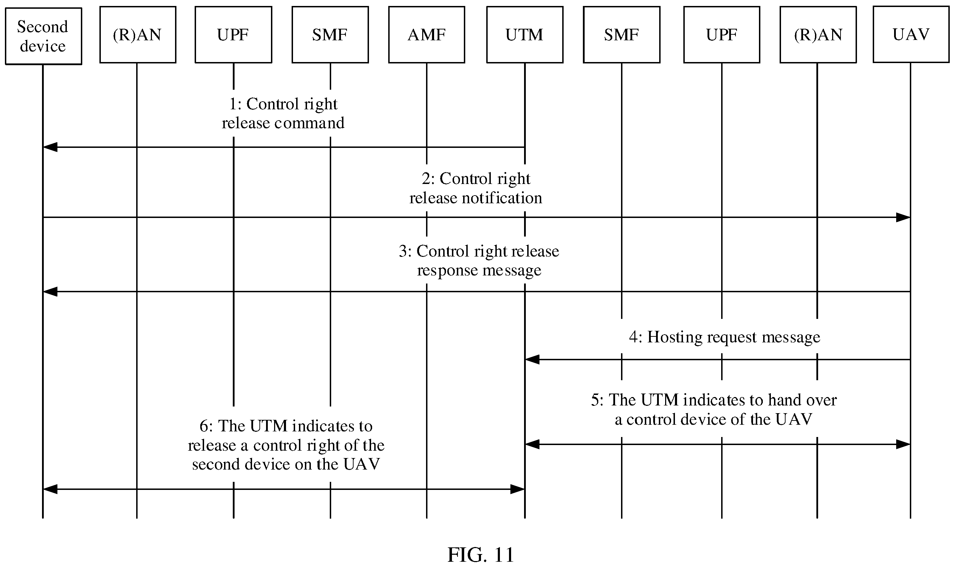

FIG. 11 is a schematic flowchart of an embodiment of a UAV control method according to this application. In the embodiment shown in FIG. 11, UTM directly sends the control right release command to the second device. In addition to initiating, according to the control right release command, release of the control right of second device on the UAV, the second device can further notify the UAV that the second device is about to release the control right on the UAV, so that after the UAV determines that the second device is about to release the control right, the UAV requests the UTM to host the UAV. According to the UAV control method provided in this embodiment, the hosting of the UAV and the release of the control right used by the second device to control the UAV can be completed in parallel. As shown in FIG. 11, the following steps are provided.
1: The UTM sends the control right release command to the second device.
   The UTM directly sends the control right release command to the second device, or the UTM may send the control right release command to the second device by using the AMF network element or the SMF network element corresponding to the second device. The command may be implemented by using a new message type between the UTM and the second device, or the command may be an element included in an existing message between the UTM and the second device.
2: The second device sends a control right release notification to the UAV.

Specifically, after receiving the control right release command sent by the UTM, the second device sends the control right release notification message to the corresponding UAV. The control right release notification message is used to indicate to the UAV that the second device needs to release the control right of the second device on the UAV.

Optionally, the second device may send the control right release notification message to the UAV through an established communications channel used to control the UAV. The communications channel includes a communications channel between a CN accessed by the second device and a CN accessed by the UAV, or a communications channel directly established between the second device and the UAV.

Optionally, after receiving the control right release command, the UAV may further send a response to the second device, to confirm with the UTM that the control right release command sent by the second device has been received.

3: The UAV sends the control right release response to the second device.

Specifically, after receiving the control right release notification message sent by the second device, the UAV sends the control right release response to the second device, and confirms, with the second device, that handover of the control device of the UAV has been completed.

4: The UAV sends a hosting request message to the UTM.

Specifically, after receiving the control right release response sent by the second device, the UAV determines that the second device is about to release the control right. To avoid a case in which the UAV has no control device, the UAV may send the hosting request message to the UTM, to request the UTM to control the UAV in place of the second device, that is, host the UAV.

5: After receiving the hosting request message from the UAV, the UTM determines, based on the hosting request message, that the control device of the UAV needs to be handed over, and indicates to hand over the control device of the UAV.

Step 5 may be performed with reference to any embodiment of the UAV control method in which the UTM indicates that the control device of the UAV needs to be handed over and that is shown in FIG. 5 or FIG. 6. This is not described again.

6: The UTM indicates to release the control right of the second device on the UAV.

Step 6 may be performed with reference to any embodiment of the method that is for indicating, by the UTM, the second device to release the control right on the UAV and that is shown in FIG. 7 to FIG. 10. This is not described again.

Optionally, a sequence of step 5 and step 6 in the embodiment shown in FIG. 11 is not limited, or step 5 and step 6 may be performed in parallel.

Optionally, the SMF network element corresponding to the second device and the SMF network element corresponding to the UAV that are shown in FIG. 11 may be a same network element, or may be different network elements.

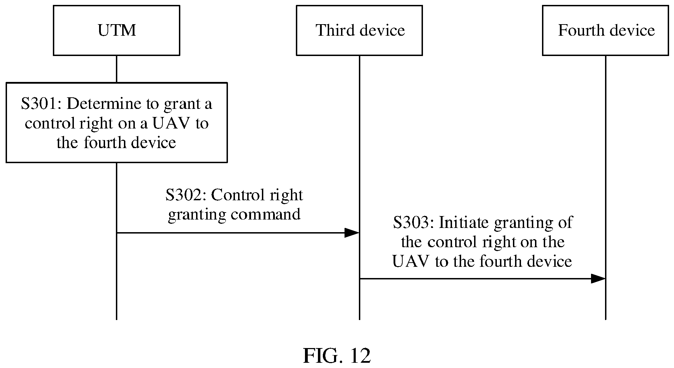

FIG. 12 is a schematic flowchart of an embodiment of a UAV control method according to this application. The embodiment shown in FIG. 12 provides a UAV control method in which the UTM grants the control right on the UAV to a new control device. In this embodiment, for ease of description, the control device to which the control right is granted is denoted as a fourth device. In other words, the UTM grants the control right on the UAV to the fourth device, so that the fourth device can control the UAV.

Optionally, according to the UAV control method provided in this embodiment, in any embodiment shown in FIG. 7 to FIG. 11, after releasing the control right of the second device on the UAV, the UTM may grant the control right on the UAV to the fourth device.

S301: The UTM determines to grant the control right on the UAV to the fourth device.

Specifically, the UTM first determines to grant the control right on the UAV to the fourth device, in other words, determines that the fourth device can control the UAV.

S302: The UTM sends a control right granting command to a third device.

Specifically, after determining, in S301, that the control right on the UAV needs to be granted to the fourth device, the UTM sends the control right granting command to the third device. The control right granting command is used to indicate, to the third device, that the control right on the UAV is granted to the fourth device. The control right granting command includes indication information used for granting the control right on the UAV to the fourth device, the information about the UAV, and information about the fourth device. The information about the UAV includes the address information of the UAV and/or the identification information of the UAV, and the information about the fourth device includes information about the fourth device and/or identifier information of the fourth device.

The indication information used for granting the control right on the UAV to the fourth device in the control right granting command is used by the third device to determine that the control right on the UAV needs to be granted to the fourth device. The identification information of the UAV in the control right granting command is used by the fourth device to determine the UAV corresponding to the control right that needs to be granted to the fourth device.

Optionally, the third device in this embodiment may be a network device corresponding to the fourth device, and the network device corresponding to the fourth device can manage communication between the fourth device and the UAV. For example, the third device may be an access and mobility management function network element corresponding to the fourth device, and the access and mobility management function network element may be an AMF network element in the 5G communications system.

Optionally, the control right granting command provided in this embodiment may be a new information element included in a message sent by the UTM to the third device in the conventional technology. Alternatively, the control right granting command may be a part of an existing information element in a message sent by the UTM to the third device in the conventional technology. Alternatively, the control right granting command may be a new message or a new instruction sent by the UTM to the third device. This is not limited in this embodiment.

S303: The third device initiates, according to the control right granting command, granting of the control right on the UAV to the fourth device.

Specifically, after the third device receives the control right granting command sent by the UTM, the third device initiates, according to the control right granting command, granting of the control right on the UAV to the fourth device.

In a possible implementation of this embodiment, the third device indicates, by sending a granting command to the fourth device, that the control right on the UAV needs to be granted to the fourth device. The granting command includes the indication information used for granting the control right on the UAV to the fourth device and/or the information about the UAV. The granting command sent by the third device to the fourth device may be included in an existing message sent by the third device to the fourth device, or the granting command is a new message sent by the third device to the fourth device.

Optionally, the granting command may include all or some elements in the control right granting command received by the third device, or the granting command may include the control right granting command. For example, the control right granting command is included, in a form of an element, in the granting command sent by the third device to the fourth device.

The fourth device stores the information that is about the UAV and that is in the fourth device according to the received granting command, so that the fourth device can control the UAV. In this way, the granting of the control right on the UAV to the fourth device is implemented.

In conclusion, in the UAV control method provided in this embodiment, the UTM sends the control right granting command to the third device, and the third device initiates, according to the control right granting command, granting of the control right on the UAV to the fourth device, to grant the control right on the UAV to the new device, thereby clarifying granting that is of a control right on a control device of an accessed UAV and that is performed by the UTM. Finally, the UTM can control the accessed UAV by using a communications network.

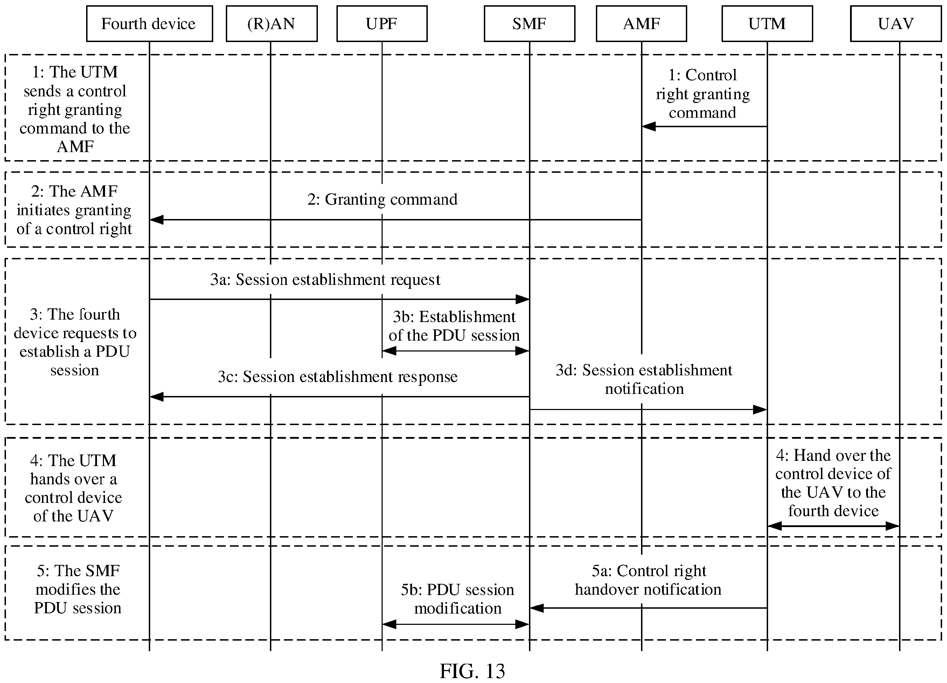

Further, on the basis of the embodiment of the UAV control method shown in FIG. 12, this application further provides a specific implementation when the method is applied to a 5G system and the third device is the access and mobility management function network element corresponding to the fourth device. The access and mobility management function network element may be an AMF network element in the 5G communications system. The following provides description with reference to FIG. 13. FIG. 13 is a schematic flowchart of an embodiment of a UAV control method according to this application. As shown in FIG. 13, the following steps are provided.
1: The UTM sends the control right granting command to the AMF network element.
   According to the foregoing embodiment of this application, after hosting the UAV and releasing the control right of the original control device on the UAV, the UTM may determine to establish the control right of the fourth device on the UAV, and send the control right granting command to the AMF network element corresponding to the fourth device.
2: The AMF network element initiates granting of the control right on the UAV to the fourth device.

The AMF network element may send the granting command to the fourth device, to indicate to grant the control right on the UAV to the fourth device.

Optionally, after receiving the control right granting command sent by the UTM, the AMF network element initiates configuration update modification to the fourth device according to the control right granting command, and sends a configuration update command to the fourth device. The configuration update command is the granting command in this embodiment. The configuration update command may include all or some elements in the control right granting command received by the AMF network element, or the configuration update command includes the control right granting command. For example, the control right granting command is included in the configuration update command in a form of an information element.

Optionally, after the fourth device receives the configuration update command sent by the AMF network element, the fourth device may locally store the information about the UAV, and return a configuration update response to the AMF network element, to determine, from the AMF network element, that configuration has been updated.

3: The fourth device requests, to the SMF network element, to establish a PDU session.

Specifically, the fourth device sends a session establishment request message to the SMF network element by using step 3a, to request to establish the PDU session used by the fourth device to control the UAV. Optionally, the session establishment request message includes indication information about that the PDU session requested to be established is used by the fourth device to control the UAV.

After receiving the session establishment request message sent by the fourth device, the SMF network element indicates, by using step 3b, a UPF network element corresponding to the fourth device to establish information that is in a detection rule and/or a forwarding rule and that is used by the fourth device to control the UAV, so that the UPF network element reserves a resource for the PDU session used by the fourth device to control the UAV, and allocates, to the fourth device, address information used for controlling the UAV.

Optionally, if the fourth device has established the PDU session used to control the UAV, the SMF network element indicates the UPF network element corresponding to the fourth device to modify information that is in the detection rule and/or the forwarding rule and that is used by the fourth device to control the UAV, so that the fourth device can control the UAV by using a modified PDU session.

Subsequently, when sending a session establishment response to the fourth device by using step 3c, the SMF network element confirms, with the fourth device, that the PDU session has established. Optionally, if PDU session modification is performed in step 3b, in step 3c, the SMF network element sends a session modification response to the fourth device, to confirm, to the fourth device, that the PDU session has been modified.

4: The UTM hands over the control device of the UAV to the fourth device.

Specifically, in this step, the UTM may hand over the original control device of the UAV to the fourth device by using the UAV control method in any embodiment shown in FIG. 5 or FIG. 6. An implementation and a principle of this embodiment are the same as an implementation and a principle of the embodiment shown in FIG. 5 or FIG. 6. This is not described again.

5: The SMF modifies the PDU session.

Specifically, after determining that the UAV has handed over the control device of the UAV to the fourth device, the UTM sends, by using step 5a, a control right handover notification to the SMF network element corresponding to the fourth device, so that the SMF network element determines that the control right of the UAV has been handed over. Optionally, the control right handover notification includes the information about the UAV, for example, the address information of the UAV and/or the identification information of the UAV.

After receiving the control right handover notification sent by the UTM, the SMF network element indicates the UPF network element corresponding to the fourth device to modify the information that is in the detection rule and/or the forwarding rule and that is used by the fourth device to control the UAV, so that the fourth device can control the UAV by using the modified PDU session.

Optionally, after step 5 provided in this embodiment is performed, if the original control device of the UAV does not yet release the control right, the UTM may release the control right that is of the original control device of the UAV and that is on the UAV by using the UAV control method in any embodiment shown in FIG. 7 to FIG. 10. An implementation and a principle are the same. This is not described again.

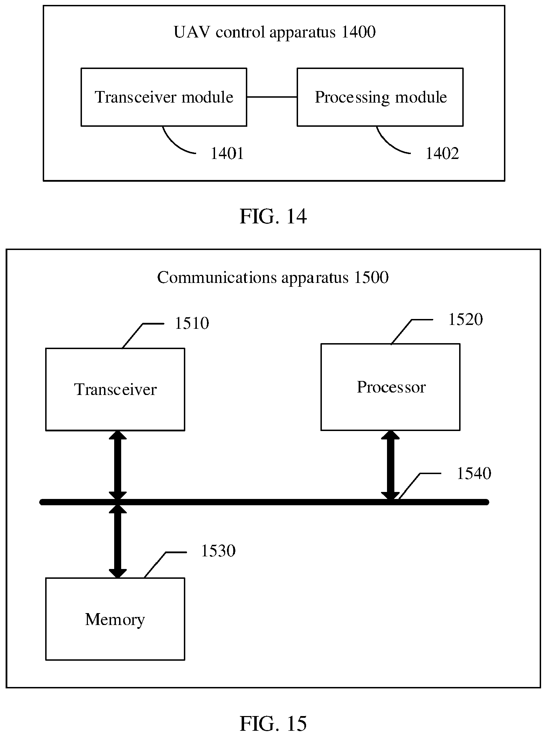

In the foregoing embodiments provided in this application, the methods provided in the embodiments of this application are separately described from perspectives of interaction between the UTM, the UAV, the control device of the UAV, the network device corresponding to the UAV, and a network device corresponding to the control device of the UAV. To implement the functions in the methods provided in the embodiments of this application, the UTM, the UAV, the control device of the UAV, the network device corresponding to the UAV, and the network device corresponding to the control device of the UAV may further include a hardware structure and/or a software module. The functions are implemented in a form of the hardware structure, the software module, or a combination of the hardware structure and the software module. Whether a specific function in the foregoing functions is performed by the hardware structure, the software module, or the combination of the hardware structure and the software module depends on a specific application and a design constraint of the technical solutions. For example, FIG. 14 is a schematic structural diagram of an embodiment of a UAV traffic management apparatus according to this application. The UAV traffic management apparatus shown in FIG. 14 may be configured to implement the UAV control methods provided in the foregoing embodiments. The UAV traffic management apparatus 1400 includes a transceiver module 1401 and a processing module 1402.

In a possible implementation, the UAV traffic management apparatus 1400 shown in FIG. 14 may be the unmanned aerial vehicle traffic management UTM network element in any embodiment shown in FIG. 5 and FIG. 6, or may be an apparatus that can implement a function of the unmanned aerial vehicle traffic management UTM network element in any embodiment shown in FIG. 5 and FIG. 6. In this case, for the UAV traffic management apparatus 1400, the processing module 1402 is configured to determine that a control device of an unmanned aerial vehicle UAV needs to be handed over. The transceiver module 1401 is configured to send a hosting command to a network device, to enable the network device to indicate, according to the hosting command, that the UAV needs to hand over the control device of the UAV. The hosting command is used to hand over the control device of the UAV, and the hosting command includes indication information used for handing over the control device of the UAV and information about the UAV. Optionally, in the foregoing embodiment, the hosting command further includes information about a to-be-handed-over-to control device of the UAV.

Optionally, in the foregoing embodiment, the hosting command further includes information about a user plane function network element corresponding to the to-be-handed-over-to control device of the UAV. The information about the user plane function network element corresponding to the to-be-handed-over-to control device of the UAV is used by the network device to determine the user plane function network element corresponding to the to-be-handed-over-to control device of the UAV.

Optionally, in the foregoing embodiment, the network device is a session management function network element corresponding to the UAV.

Optionally, in the foregoing embodiment, the transceiver module 1401 is specifically configured to send the hosting command to a policy control function network element, to enable the policy control function network element to indicate that the session management function network element needs to hand over the control device of the UAV.

Optionally, in the foregoing embodiment, the transceiver module 1401 is further configured to receive a hosting request message from the UAV. The hosting request message is used to request to hand over the control device of the UAV. The processing module 1402 is specifically configured to determine, based on the hosting request message, that the control device of the UAV needs to be handed over.

When the UAV traffic management apparatus provided in each of the foregoing embodiments serves as the UTM to execute the UAV control method shown in FIG. 5 or FIG. 6, for a specific implementation and a principle thereof, refer to a corresponding embodiment in FIG. 5 and FIG. 6. Details are not described herein again.

In another possible implementation, the UAV traffic management apparatus 1400 shown in FIG. 14 may alternatively be the network device in any one of the foregoing embodiments shown in FIG. 5 and FIG. 6, or may be an apparatus that can implement a function of the network device in any one of the foregoing embodiments shown in FIG. 5 and FIG. 6. In this case, for the UAV traffic management apparatus 1400, the transceiver module 1401 is configured to receive a hosting command. The hosting command is used to hand over a control device of an unmanned aerial vehicle UAV, and the hosting command includes indication information used for handing over the control device of the UAV and information about the UAV. The processing module 1402 is configured to indicate, according to the hosting command, that the UAV needs to hand over the control device of the UAV.

Optionally, in the foregoing embodiment, the hosting command further includes information about a to-be-handed-over-to control device of the UAV.

Optionally, in the foregoing embodiment, the hosting command further includes information about a user plane function network element corresponding to the to-be-handed-over-to control device of the UAV. The information about the user plane function network element corresponding to the to-be-handed-over-to control device of the UAV is used to determine the user plane function network element corresponding to the to-be-handed-over-to control device of the UAV.

Optionally, in the foregoing embodiment, the processing module 1402 is specifically configured to send, according to the hosting command, a handover command to the UAV by using the transceiver module 1401. The handover command is used to indicate that the UAV needs to hand over the control device of the UAV.

Optionally, in the foregoing embodiment, the handover command includes the indication information used for handing over the control device of the UAV and/or the information about the to-be-handed-over-to control device of the UAV.

Optionally, in the foregoing embodiment, the processing module 1402 is further configured to: determine structured control information according to the hosting command, and send the structured control information to a user plane function network element corresponding to the UAV, where the structured control information is used to indicate to modify, to the information about the to-be-handed-over-to control device of the UAV, the information about the control device of the UAV in a detection rule and/or a forwarding rule in the user plane function network element network element corresponding to the UAV; and/or indicate to modify, to the information about the user plane function network element of the to-be-handed-over-to control device of the UAV, the information about the user plane function network element corresponding to the control device of the UAV in the detection rule and/or the forwarding rule in the user plane function network element corresponding to the UAV.

Optionally, in the foregoing embodiment, the transceiver module 1401 is further configured to send a hosting command response to an unmanned aerial vehicle traffic management UTM network element. The hosting command response is used to indicate that the control device of the UAV has been handed over.

When the UAV traffic management apparatus provided in each of the foregoing embodiments serves as the network device to execute the UAV control method shown in FIG. 5 or FIG. 6, for a specific implementation and a principle thereof, refer to a corresponding embodiment in FIG. 5 and FIG. 6. Details are not described herein again.

In another possible implementation, the UAV traffic management apparatus 1400 shown in FIG. 14 may alternatively be the first device in any one of the foregoing embodiments shown in FIG. 7 to FIG. 11, or may be an apparatus that can implement a function of the first device in any one of the embodiments shown in FIG. 7 to FIG. 11. In this case, for the UAV traffic management apparatus 1400, the transceiver module 1401 is configured to receive a control right release command. The control right release command is used to release a control right of a second device on a UAV, and the control right release command includes indication information used for releasing the control right of the second device on the UAV and information about the UAV. The processing module 1402 is configured to initiate, based on the control right release command, release of the control right of the second device on the UAV.

Optionally, in the foregoing embodiment, the control right release command further includes a reason for releasing the control right of the second device on the UAV and/or information about the second device.

Optionally, in the foregoing embodiment, the transceiver module 1401 is further configured to send a control right release command response to an unmanned aerial vehicle traffic management UTM network element. The control right release command response is used to indicate that the control right of the second device on the UAV has been released.

When the UAV traffic management apparatus provided in each of the foregoing embodiments serves as the first device to execute the UAV control method shown in FIG. 7, for a specific implementation and a principle thereof, refer to a corresponding embodiment in FIG. 7. Details are not described herein again.

Optionally, the UAV traffic management apparatus in the foregoing embodiment is a session management function network element corresponding to the second device. The processing module 1402 is specifically configured to send, based on the control right release command, a first release command to the second device by using the transceiver module 1401. The first release command is used to indicate the second device to release the control right on the UAV.

Optionally, in the foregoing embodiment, the processing module 1402 is further configured to: determine structured control information based on the control right release command, and send the structured control information to a user plane function network element corresponding to the second device by using the transceiver module 1401, where the structured control information is used to indicate the user plane function network element to delete information that is in a detection rule and/or a forwarding rule and that is used by the second device to control the UAV; and/or send, based on the control right release command by using the transceiver module 1401, a session release request to the user plane function network element corresponding to the second device, where the session release request is used to indicate the user plane function network element to release a session context used by the second device to control the UAV.

Optionally, in the foregoing embodiment, the first release command includes the indication information used for releasing the control right of the second device on the UAV and the information about the UAV.

When the UAV traffic management apparatus provided in each of the foregoing embodiments serves as the first device to execute the UAV control method shown in FIG. 8, for a specific implementation and a principle thereof, refer to a corresponding embodiment in FIG. 8. Details are not described herein again.

Optionally, the UAV traffic management apparatus in the foregoing embodiment is the second device. The processing module 1402 is specifically configured to send, based on the control right release command by using the transceiver module 1401, a session management message to the corresponding session management function network element of the second device. The session management message is used to indicate the session management function network element to modify or release the session context used by the second device to control the UAV.

Optionally, the UAV traffic management apparatus in the foregoing embodiment is the second device. The processing module 1402 is specifically configured to send, based on the control right release command by using the transceiver module 1401, a first deregistration message to an access and mobility management function network element corresponding to the second device. The first deregistration message is used to indicate to deregister the second device.

When the UAV traffic management apparatus provided in each of the foregoing embodiments serves as the first device to execute the UAV control method shown in FIG. 9, for a specific implementation and a principle thereof, refer to a corresponding embodiment in FIG. 9. Details are not described herein again.

Optionally, in the foregoing embodiment, the transceiver module 1401 is further configured to send a control right release notification message to the UAV. The control right release notification message is used to indicate to the UAV that the control right of the second device on the UAV needs to be released. The transceiver module 1401 is further configured to receive a control right release response sent by the UAV. The control right release response is used to indicate that the UAV has completed handover of the control device of the UAV.

When the UAV traffic management apparatus provided in each of the foregoing embodiments serves as the first device to execute the UAV control method shown in FIG. 11, for a specific implementation and a principle thereof, refer to a corresponding embodiment in FIG. 11. Details are not described herein again.

Optionally, the UAV traffic management apparatus in the foregoing embodiment is the access and mobility management function network element corresponding to the second device. The processing module 1402 is specifically configured to send, based on the control right release command, a second release command to the second device by using the transceiver module 1401. The second release command is used to indicate the second device to release the control right on the UAV.

Optionally, the second release command includes one or more of the following: indication information used for releasing the control right of the second device on the UAV and information about the UAV.

Optionally, the UAV traffic management apparatus in the foregoing embodiment is the access and mobility management function network element corresponding to the second device. The processing module 1402 is specifically configured to send, based on the control right release command by using the transceiver module 1401, a second deregistration message to the second device. The second deregistration message is used to indicate to deregister the second device.

When the UAV traffic management apparatus provided in each of the foregoing embodiments serves as the first device to execute the UAV control method shown in FIG. 10, for a specific implementation and a principle thereof, refer to a corresponding embodiment in FIG. 10. Details are not described herein again.

In another possible implementation, the UAV traffic management apparatus 1400 shown in FIG. 14 may alternatively be the unmanned aerial vehicle traffic management UTM network element in any one of the foregoing embodiments shown in FIG. 7 to FIG. 11, or may be an apparatus that can implement a function of the UTM in any one of the embodiments shown in FIG. 7 to FIG. 11. In this case, for the UAV traffic management apparatus 1400, the transceiver module 1401, and the processing module 1402, the processing module 1402 is configured to determine that a control right of a second device on an unmanned aerial vehicle UAV needs to be released. The transceiver module 1401 is configured to send a control right release command to a first device, to enable the first device to initiate, based on the control right release command, release of the control right of the second device on the UAV. The control right release command is used to release the control right of the second device on the UAV, and the control right release command includes indication information used for releasing the control right of the second device on the UAV and information about the UAV.

Optionally, in the foregoing embodiment, the control right release command further includes a reason for releasing the control right of the second device on the UAV.

Optionally, in the foregoing embodiment, the first device includes the second device and a session management function network element corresponding to the second device or an access and mobility management function network element corresponding to the second device.

When the UAV traffic management apparatus provided in the foregoing embodiment serves as the UTM to execute the UAV control method shown in FIG. 7 to FIG. 11, for a specific implementation and a principle thereof, refer to a corresponding embodiment in FIG. 7 to FIG. 11. Details are not described herein again.

In another possible implementation, the UAV traffic management apparatus 1400 shown in FIG. 14 may alternatively be the unmanned aerial vehicle traffic management UTM network element in any one of the foregoing embodiments shown in FIG. 12 and FIG. 13, or may be an apparatus that can implement a function of the UTM in any one of the embodiments shown in FIG. 12 and FIG. 13. In this case, for the UAV traffic management apparatus 1400, the processing module 1402 is configured to determine to grant a control right on a UAV to a fourth device. The transceiver module 1401 is configured to send a control right granting command to a third device. The control right granting command is used to indicate to grant the control right on the UAV to the fourth device. The control right granting command includes indication information used for granting the control right on the UAV to the fourth device, information about the UAV, and information about the fourth device.

When the UAV traffic management apparatus provided in the foregoing embodiment serves as the UTM to execute the UAV control method shown in FIG. 12 and FIG. 13, for a specific implementation and a principle thereof, refer to a corresponding embodiment in FIG. 12 and FIG. 13. Details are not described herein again.

In another possible implementation, the UAV traffic management apparatus 1400 shown in FIG. 14 may alternatively be the third device in any one of the foregoing embodiments shown in FIG. 12 and FIG. 13, or may be an apparatus that can implement a function of the third device in any one of the embodiments shown in FIG. 12 and FIG. 13. In this case, for the UAV traffic management apparatus 1400, the transceiver module 1401 is configured to receive a control right granting command. The control right granting command is used to indicate to grant a control right on a UAV to a fourth device. The control right granting command includes indication information used for granting the control right on the UAV to the fourth device, information about the UAV, and information about the fourth device. The processing module 1402 is configured to initiate, according to the control right granting command, granting of the control right on the UAV to the fourth device.

When the UAV traffic management apparatus provided in the foregoing embodiment serves as the third device to execute the UAV control method shown in FIG. 12 and FIG. 13, for a specific implementation and a principle thereof, refer to a corresponding embodiment in FIG. 12 and FIG. 13. Details are not described herein again.

Division into modules in the embodiments of this application is an example, is only logical function division, and may be other division in an actual implementation. In addition, function modules in the embodiments of this application may be integrated into one processor, or may exist alone physically, or two or more modules are integrated into one module. The integrated module may be implemented in a form of hardware, or may be implemented in a form of a software functional module.

FIG. 15 is a schematic structural diagram of an embodiment of a communications apparatus according to this application. FIG. 15 shows the communications apparatus 1500 according to this application. The communications apparatus shown in FIG. 15 may be configured to implement the UAV control method provided in the foregoing embodiments of this application. The communications apparatus 1500 includes:
at least one processor 1520, configured to perform a function specifically performed by the communications apparatus in the UAV control method. The processor may be a general purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in the embodiments of this application. The general purpose processor may be a microprocessor or any conventional processor or the like. The steps of the method disclosed with reference to the embodiments of this application may be directly performed by a hardware processor, or may be performed by using a combination of hardware in the processor and a software module. The communications apparatus 1500 further includes:
at least one memory 1530, configured to store a program instruction, and/or that the data memory 1530 is coupled to the processor 1520. The processor 1520 may operate in collaboration with the memory 1530. The processor 1515 may execute the program instruction stored in the memory 1530. At least one of the at least one memory may be included in the processor. The memory may be a non-volatile memory, for example, a hard disk drive (hard disk drive, HDD), or a solid-state drive (solid-state drive, SSD), or may be a volatile memory (volatile memory), for example, a random access memory (random-access memory, RAM). The memory is any other medium that can be used to carry or store expected program code in a form of an instruction or a data structure and that can be accessed by a computer. However, this is not limited thereto. The memory in the embodiments of this application may alternatively be a circuit or any other apparatus that can implement a storage function, and is configured to store a program instruction and/or data.

A communications interface may be further included. The communications interface may be a transceiver 1510, a circuit, a bus, or an interface in another form, and is configured to communicate with another device by using a transmission medium. Therefore, an apparatus used in the apparatus 1500 may communicate with another device. The memory 1530, the processor 1520, and the transceiver 1510 in the communications apparatus 1500 are connected to each other through a bus 1540. In this embodiment of this application, in an example of the communications apparatus shown in FIG. 15, a specific connection medium between the communications interface, the processor, and the memory is not limited. In FIG. 15, an example in which the memory, the processor, and the transceiver are connected through the bus is used for description. The bus is represented by using a think line in the figure. A connection manner between other components is merely an example for description, and is not limited thereto. The bus may be classified into an address bus, a data bus, a control bus, and the like. For ease of representation, only one thick line is used to represent the bus in the figure, but this does not mean that there is only one bus or only one type of bus. In addition, couplings in the embodiments of this application are indirect couplings or communication connections between apparatuses, units, or modules, may be in an electrical, a mechanical, or another form, and are used for information exchange between the apparatuses, the units, or the modules.

In a possible implementation, the communications apparatus 1500 shown in FIG. 15 may be configured to perform a function of the UTM in any embodiment shown in FIG. 5 and FIG. 6. The apparatus may be the UTM, or may be an apparatus in the UTM. The apparatus may be a chip system. Alternatively, the communications apparatus 1500 shown in FIG. 15 may be used as the UAV control device 1400 in the embodiment shown in FIG. 14, and perform a function of the UAV control device 1400 when the UAV control device 1400 is used as the UTM in any embodiment shown in FIG. 5 and FIG. 6. The processor 1520 is configured to perform a function of the processing module 1402, and the transceiver 1510 is configured to perform a function of the transceiver module 1401. For example, the communications apparatus 1500 shown in FIG. 15 may determine, by using the processor 1520, that a control device of a UAV needs to be handed over, and send a hosting command to a network device by using the transceiver 1510. For a specific implementation method and principle in which the communications apparatus 1500 is used as the UTM in this example, refer to the detailed descriptions of the UTM in the example of the corresponding UAV control method in FIG. 5 and FIG. 6. Details are not described herein again.

In another possible implementation, the communications apparatus shown in FIG. 15 may be further configured to perform a function of the network device in any embodiment shown in FIG. 5 and FIG. 6. The apparatus may be the network device, or may be an apparatus in the network device. The apparatus may be a chip system. Alternatively, the communications apparatus shown in FIG. 15 may be further used as the UAV control device 1400 in the embodiment shown in FIG. 14, and perform a function of the control device 1400 when the control device 1400 is used as the network device in any embodiment shown in FIG. 5 and FIG. 6. The processor 1520 is configured to perform a function of the processing module 1402, and the transceiver 1510 is configured to perform a function of the transceiver module 1401. For example, the communications apparatus 1500 shown in FIG. 15 may receive a hosting command by using the transceiver 1510, and use the processor 1520 to indicate, according to the hosting command, that a UAV needs to hand over a control device of the UAV. For a specific implementation method and principle in which the communications apparatus 1500 is used as the network device in this example, refer to the detailed descriptions of the network device in the example of the corresponding UAV control method in FIG. 5 and FIG. 6. Details are not described herein again.

In another possible implementation, the communications apparatus shown in FIG. 15 may be further configured to perform a function of the first device in any embodiment shown in FIG. 7 to FIG. 11. The apparatus may be the first device, or may be an apparatus in the first device. The apparatus may be a chip system. Alternatively, the communications apparatus shown in FIG. 15 may be used as the UAV control device 1400 in the embodiment shown in FIG. 14, and perform a function of the control device 1400 when the control device 1400 is used as the first device in any embodiment shown in FIG. 7 to FIG. 11. The processor 1520 is configured to perform a function of the processing module 1402, and the transceiver 1510 is configured to perform a function of the transceiver module 1401. For example, the communications apparatus 1500 shown in FIG. 15 may receive, by using the transceiver 1510, a control right release command, and use the processor 1520 to initiate, based on the control right release command, release of a control right of a second device on a UAV. For a specific implementation method in which the communications apparatus 1500 is used as the first device in this example, refer to the detailed descriptions of the first device in the example of the corresponding UAV control method in FIG. 7 to FIG. 11. Details are not described herein again.

In another possible implementation, the communications apparatus shown in FIG. 15 may be further configured to perform a function of the UTM in any embodiment shown in FIG. 7 to FIG. 11. The apparatus may be the UTM, or may be an apparatus in the UTM. The apparatus may be a chip system. Alternatively, the communications apparatus shown in FIG. 15 may be further used as the UAV control device 1400 in the embodiment shown in FIG. 14, and perform a function of the control device 1400 when the control device 1400 is used as the UTM in any embodiment shown in FIG. 7 to FIG. 11. The processor 1520 is configured to perform a function of the processing module 1402, and the transceiver 1510 is configured to perform a function of the transceiver module 1401. For example, the communications apparatus 1500 shown in FIG. 15 may determine, by using the processor 1520, that a control right of a second device on an unmanned aerial vehicle UAV needs to be released, and send a control right release command to the first device by using the transceiver 1510. For a specific implementation method in which the communications apparatus 1500 is used as the UTM in this example, refer to the detailed descriptions of the UTM in the example of the corresponding UAV control method in FIG. 7 to FIG. 11. Details are not described herein again.

In another possible implementation, the communications apparatus shown in FIG. 15 may be further configured to perform a function of the UTM in any embodiment shown in FIG. 12 and FIG. 13. The apparatus may be the UTM, or may be an apparatus in the UTM. The apparatus may be a chip system. Alternatively, the communications apparatus shown in FIG. 15 may be further used as the UAV control device 1400 in the embodiment shown in FIG. 14, and perform a function of the control device 1400 when the control device 1400 is used as the UTM in any embodiment shown in FIG. 12 and FIG. 13. The processor 1520 is configured to perform a function of the processing module 1402, and the transceiver 1510 is configured to perform a function of the transceiver module 1401. For example, the communications apparatus 1500 shown in FIG. 15 may determine, by using the processor 1520, to grant a control right on a UAV to a fourth device, and send, by using the transceiver 1510, a control right granting command to the third device. For a specific implementation method in which the communications apparatus 1500 is used as the UTM in this example, refer to the detailed descriptions of the UTM in the example of the corresponding UAV control method in FIG. 12 and FIG. 13. Details are not described herein again.

In another possible implementation, the communications apparatus shown in FIG. 15 may be further configured to perform a function of the third device in any embodiment shown in FIG. 12 and FIG. 13. The apparatus may be the third device, or may be an apparatus in the third device. The apparatus may be a chip system. Alternatively, the communications apparatus shown in FIG. 15 may be further used as the UAV control device 1400 in the embodiment shown in FIG. 14, and perform a function of the control device 1400 when the control device 1400 is used as the third device in any embodiment shown in FIG. 12 and FIG. 13. The processor 1520 is configured to perform a function of the processing module 1402, and the transceiver 1510 is configured to perform a function of the transceiver module 1401. For example, the communications apparatus 1500 shown in FIG. 15 may receive, by using the transceiver 1510, a control right granting command, and use the processor 1520 to initiate, according to the control right granting command, granting of a control right on a UAV to the third device. For a specific implementation method in which the communications apparatus 1500 is used as the third device in this example, refer to the detailed descriptions of the third device in the example of the corresponding UAV control method in FIG. 12 and FIG. 13. Details are not described herein again.

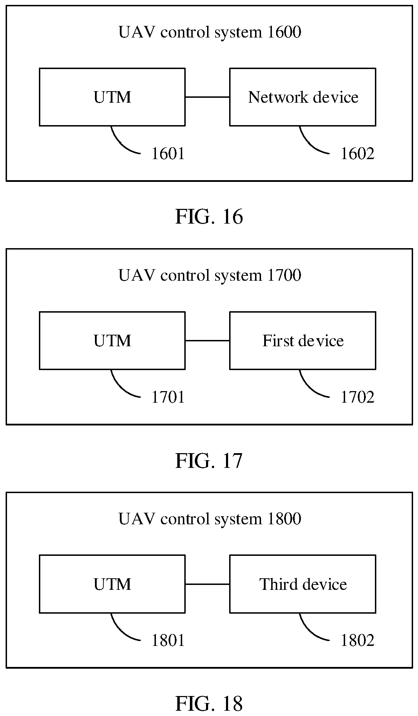

FIG. 16 is a schematic structural diagram of an embodiment of a UAV control system according to this application. As shown in FIG. 16, the UAV control system 1600 provided in this embodiment includes UTM 1601 and a network device 1602. The UTM 1601 and the network device 1602 in the UAV control system 1600 shown in FIG. 16 may be network elements in the communications network shown in FIG. 2. Alternatively, the UTM 1601 and the network device in the UAV control system 1600 may be the UAV traffic management apparatus shown in FIG. 14, and separately perform a function of the UTM and a function of the network device in the embodiment shown in FIG. 5 and FIG. 6. Alternatively, the UTM 1601 and the network device in the UAV control system 1600 may also be communications apparatuses shown in FIG. 15, and separately perform a function of the UTM and a function of the network device in the embodiment shown in FIG. 5 and FIG. 6. For example, in the UAV control system 1600 provided in this embodiment, the UTM 1601 sends a hosting command to the network device 1602. The hosting command is used to hand over a control device of an unmanned aerial vehicle UAV. After receiving the hosting command from the UTM 1601, the network device 1602 indicates, according to the hosting command, that the UAV needs to hand over the control device of the UAV. For a specific implementation method of the foregoing example, refer to detailed descriptions of the UTM and the network device in the example of the corresponding UAV control method in FIG. 5 and FIG. 6. Details are not described herein again.

FIG. 17 is a schematic structural diagram of an embodiment of a UAV control system according to this application. As shown in FIG. 17, the UAV control system 1700 provided in this embodiment includes UTM 1701 and a first device 1702. The UTM 1701 and the first device 1702 in the UAV control system 1700 shown in FIG. 17 may be network elements in the communications network shown in FIG. 3, or the first device 1702 may be the UAV control device shown in FIG. 3. Alternatively, the UTM 1701 and the network device in the UAV control system 1700 may be the UAV traffic management apparatus shown in FIG. 14, and separately perform a function of the UTM and a function of the first device in the embodiment shown in FIG. 7 to FIG. 11. Alternatively, the UTM 1701 and the first device 1702 in the UAV control system 1700 may also be the communications apparatus shown in FIG. 15, and separately perform a function of the UTM and a function of the first device in the embodiment shown in FIG. 7 to FIG. 11. For example, in the UAV control system 1700 provided in this embodiment, the UTM 1701 sends a control right release command to the first device 1702. The control right release command is used to release a control right of a second device on an unmanned aerial vehicle UAV. The first device 1702 receives the control right release command from the UTM 1701, and initiates, based on the control right release command, release of the control right of the second device on the UAV. For a specific implementation method of the foregoing example, refer to detailed descriptions of the UTM and the first device in the example of the corresponding UAV control method in FIG. 7 to FIG. 11. Details are not described herein again.

FIG. 18 is a schematic structural diagram of an embodiment of a UAV control system according to this application. As shown in FIG. 18, the UAV control system 1800 provided in this embodiment includes UTM 1801 and a third device 1802. The UTM 1801 and the third device 1802 in the UAV control system 1800 shown in FIG. 18 may be network elements in the communications network shown in FIG. 3. Alternatively, the UTM 1801 and the third device 1802 in the UAV control system 1800 may be the UAV traffic management apparatus shown in FIG. 14, and separately perform a function of the UTM and a function of the third device in the embodiment shown in FIG. 12 and FIG. 13. Alternatively, the UTM 1801 and the third device 1802 in the UAV control system 1800 may also be communications apparatuses shown in FIG. 15, and separately perform a function of the UTM and a function of the third device in the embodiment shown in FIG. 12 and FIG. 13. For example, in the UAV control system 1800 provided in this embodiment, the UTM 1801 sends a control right granting command to the third device 1802. The control right granting command is used to indicate to the third device that a control right on a UAV is granted to a fourth device. After receiving the control right granting command, the third device 1802 initiates, according to the control right granting command, granting of the control right on the UAV to the fourth device. For a specific implementation method of the foregoing example, refer to detailed descriptions of the UTM and the third device in the example of the corresponding UAV control method in FIG. 12 and FIG. 13. Details are not described herein again.

All or some of the foregoing methods in the embodiments of this application may be implemented by using software, hardware, firmware, or any combination thereof. When software is used to implement the embodiments, the embodiments may be all or partially implemented in a form of a computer program product. The computer program product includes one or more computer instructions. When the computer program instructions are loaded and executed on the computer, the procedure or functions according to the embodiments of the present application are all or partially generated. The computer may be a general-purpose computer, a special-purpose computer, a computer network, a network device, a user device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, an SSD), or the like.

## Claims

1. An unmanned aerial vehicle, control method, comprising:
determining (S101), that a control device (12) of an unmanned aerial vehicle, UAV, (11) needs to be handed over; and
sending (S 102) a hosting command for handing over the control device of the UAV (11) to a network device, **characterized in that**
the method is performed by an unmanned aerial vehicle traffic management, UTM, network element disposed in a communications network (2), wherein the UTM network element is configured to manage the UAV (11) and the UAV control device (12) that access the communications network (2); and
the hosting command is sent, by the UTM network element, to the network device to enable the network device to indicate, according to the hosting command, that the UAV (11) needs to hand over the control device of the UAV (11), wherein the hosting command comprises information about a to-be-handed-over-to control device of the UAV.

2. The method according to claim 1, wherein the network device is a session management function network element corresponding to the UAV.

3. The method according to claim 2, wherein the sending (S102), by the UTM network element, a hosting command to a network device comprises:
sending, by the UTM network element, the hosting command via a policy control function network element to indicate that the session management function network element needs to hand over the control device of the UAV.

4. The method according to any one of claims 1 to 3, wherein the method further comprises:
receiving, by the UTM network element, a hosting request message from the UAV, wherein the hosting request message is used to request to hand over the control device of the UAV; and
the determining, by UTM network element, that a control device of a UAV needs to be handed over comprises:
determining, by the UTM network element based on the hosting request message, that the control device of the UAV needs to be handed over.

5. An unmanned aerial vehicle control method, comprising:
receiving (S 102), by a network device, a hosting command, wherein the network device is a session management function network element;
**characterized in that**
the hosting command is received, by the network device, from an unmanned aerial vehicle traffic management, UTM, network element configured to manage an unmanned aerial vehicle, UAV (11) and a control device (12) of the UAV that access the communications network (2), wherein the hosting command is for handing over the control device (12) of the UAV (11); and the method further comprises indicating (S103), by the network device, according to the hosting command, that the UAV needs to hand over the control device of an UAV indicated by the hosting command, wherein
the hosting command further comprises information about a to-be-handed-over-to control device of the UAV.

6. The method according to claim 5, wherein
the hosting command further comprises information about a user plane function network element corresponding to the to-be-handed-over-to control device of the UAV; and the information about the user plane function network element corresponding to the to-be-handed-over-to control device of the UAV is used by the network device to determine the user plane function network element corresponding to the to-be-handed-over-to control device of the UAV.

7. The method according to claim Sor 6, wherein the indicating, by the network device according to the hosting command, that the UAV needs to hand over the control device of the UAV comprises:
sending, by the network device, a handover command to the UAV according to the hosting command,
wherein the handover command is used to indicate that the UAV needs to hand over the control device of the UAV.

8. The method according to claim 7, wherein the handover command comprises the indication information used for handing over the control device of the UAV and/or the information about the to-be-handed-over-to control device of the UAV.

9. The method according to any one of claims 5 to 8, wherein after the receiving, by a network device, a hosting command, the method further comprises:
determining, by the network device, structured control information according to the hosting command, and
sending the structured control information to a user plane function network element corresponding to the UAV,
wherein the structured control information is used to indicate to modify, to the information about the to-be-handed-over- to control device of the UAV, the information about the control device of the UAV in a detection rule and/or a forwarding rule in the user plane function network element corresponding to the UAV;
and/or indicate to modify, to the information about the user plane function network element of the to-be-handed-over-to control device of the UAV, information about a user plane function network element corresponding to the control device of the UAV in the detection rule and/or the forwarding rule in the user plane function network element corresponding to the UAV.

10. An unmanned aerial vehicle traffic management, UTM, network element, comprising means for carrying out steps of the method of any of claims 1 to 4.

11. A network device, comprising means for carrying out steps of the method of any of claims 5 to 8.

12. An unmanned aerial vehicle control system, comprising the unmanned aerial vehicle traffic management, UTM, network element according to claim 10 and the network device according to claim 11.

13. A computer-readable storage medium, comprising instructions, wherein when the instructions are run on a computer, the computer is enabled to perform the method according to any one of claims 1 to 9.

## Patentansprüche

1. Steuerverfahren eines unbemannten Luftfahrzeugs, umfassend:
Bestimmen (S101), dass eine Steuervorrichtung (12) eines unbemannten Luftfahrzeugs UAV (11) weitergereicht werden muss, und
Senden (S102) eines Hosting-Befehls zum Weiterreichen der Steuervorrichtung des UAV (11) an eine Netzvorrichtung, **dadurch gekennzeichnet, dass**
das Verfahren durch ein Netzelement der Verkehrsverwaltung unbemannter Luftfahrzeuge UTM, das in einem Kommunikationsnetz (2) angeordnet ist, ausgeführt wird, wobei das UTM-Netzelement ausgelegt ist zum Verwalten des UAV (11) und der UAV-Steuervorrichtung (12), die auf das Kommunikationsnetz (2) zugreifen; und
der Hosting-Befehl durch das UTM-Netzelement zu der Netzvorrichtung gesendet wird, um es der Netzvorrichtung zu ermöglichen, gemäß dem Hosting-Befehl anzugeben, dass das UAV (11) die Steuervorrichtung des UAV (11) weiterreichen muss, wobei der Hosting-Befehl Informationen über eine weiterzureichende Steuervorrichtung des UAV umfasst.

2. Verfahren nach Anspruch 1, wobei die Netzvorrichtung ein dem UAV entsprechendes Sitzungsverwaltungsfunktions-Netzelement ist.

3. Verfahren nach Anspruch 2, wobei das Senden (S102) eines Hosting-Befehls zu einer Netzvorrichtung durch das UTM-Netzelement Folgendes umfasst:
Senden des Hosting-Befehls durch das UTM-Netzelement über ein Richtliniensteuerfunktions-Netzelement, um anzugeben, dass das Sitzungsverwaltungsfunktions-Netzelement die Steuervorrichtung des UAV weiterreichen muss.

4. Verfahren nach einem der Ansprüche 1 bis 3, wobei das Verfahren ferner Folgendes umfasst:
Empfangen einer Hosting-Anforderungsnachricht von dem UAV durch das UTM-Netzelement, wobei die Hosting-Anforderungsnachricht verwendet wird, um anzufordern, die Steuervorrichtung des UAV weiterzureichen; und
das Bestimmen durch das UTM-Netzelement, dass eine Steuervorrichtung eines UAV weitergereicht werden muss, Folgendes umfasst:
Bestimmen durch das UTM-Netzelement auf der Basis der Hosting-Anforderungsnachricht, dass die Steuervorrichtung des UAV weitergereicht werden muss.

5. Steuerverfahren eines unbemannten Luftfahrzeugs, umfassend:
Empfangen (S102) eines Hosting-Befehls durch eine Netzvorrichtung, wobei die Netzvorrichtung ein Sitzungsverwaltungsfunktions-Netzelement ist;
**dadurch gekennzeichnet, dass**
der Hosting-Befehl durch die Netzvorrichtung von einem Netzelement der Verkehrsverwaltung unbemannter Luftfahrzeuge UTM, das dafür ausgelegt ist, ein unbemanntes Luftfahrzeug UAV (11) zu verwalten, und einer Steuervorrichtung (12) des UAV, das auf das Kommunikationsnetz (2) zugreift, empfangen wird, wobei der Hosting-Befehl zum Weiterreichen der Steuervorrichtung (12) des UAV (11) dient;
und das Verfahren ferner Folgendes umfasst:
Angeben (S103) durch die Netzvorrichtung gemäß dem Hosting-Befehl, dass das UAV die Steuervorrichtung eines UAV wie durch den Hosting-Befehl angegeben weiterreichen muss, wobei
der Hosting-Befehl ferner Informationen über eine weiterzureichende Steuervorrichtung des UAV umfasst.

6. Verfahren nach Anspruch 5, wobei
der Hosting-Befehl ferner Informationen über ein der weiterzureichenden Steuervorrichtung des UAV entsprechendes Benutzerebenenfunktions-Netzelement umfasst; und die Informationen über das der weiterzureichenden Steuervorrichtung des UAV entsprechende Benutzerebenenfunktions-Netzelement durch die Netzvorrichtung verwendet werden, um das der weiterzureichenden Steuervorrichtung des UAV entsprechende Benutzerebenenfunktions-Netzelement zu bestimmen.

7. Verfahren nach Anspruch 5 oder 6, wobei das Angeben durch die Netzvorrichtung gemäß dem Hosting-Befehl, dass das UAV die Steuervorrichtung des UAV weiterreichen muss, Folgendes umfasst:
Senden eines Weiterreichungsbefehls zu dem UAV durch die Netzvorrichtung gemäß dem Hosting-Befehl, wobei der Weiterreichungsbefehl verwendet wird, um anzugeben, dass das UAV die Steuervorrichtung des UAV weiterreichen muss.

8. Verfahren nach Anspruch 7, wobei der Weiterreichungsbefehl die zum Weiterreichen der Steuervorrichtung des UAV verwendeten Angabeinformationen und/oder die Informationen über die weiterzureichende Steuervorrichtung des UAV umfasst.

9. Verfahren nach einem der Ansprüche 5 bis 8, wobei das Verfahren nach dem Empfangen eines Hosting-Befehls durch eine Netzvorrichtung ferner Folgendes umfasst:
Bestimmen von strukturierten Steuerinformationen durch die Netzvorrichtung gemäß dem Hosting-Befehl und Senden der strukturierten Steuerinformationen zu einem dem UAV entsprechenden Benutzerebenenfunktions-Netzelement,
wobei die strukturierten Steuerinformationen verwendet werden, um anzugeben, auf die Informationen über die weiterzureichende Steuervorrichtung des UAV die Informationen über die Steuervorrichtung des UAV in einer Detektionsregel und/oder einer Weiterleitungsregel in dem dem UAV entsprechenden Benutzerebenenfunktions-Netzelement zu modifizieren; und/oder anzugeben, auf die Informationen über das Benutzerebenenfunktions-Netzelement der weiterzureichenden Steuervorrichtung des UAV Informationen über ein der Steuervorrichtung des UAV entsprechendes Benutzerebenenfunktions-Netzelement in der Detektionsregel und/oder der Weiterleitungsregel in dem dem UAV entsprechenden Benutzerebenenfunktions-Netzelement zu modifizieren.

10. Netzelement der Verkehrsverwaltung unbemannter Luftfahrzeuge UTM mit Mitteln zum Ausführen der Schritte des Verfahrens nach einem der Ansprüche 1 bis 4.

11. Netzvorrichtung mit Mitteln zum Ausführen der Schritte des Verfahrens nach einem der Ansprüche 5 bis 8.

12. Steuersystem eines unbemannten Luftfahrzeugs, das das Netzelement der Verkehrsverwaltung unbemannter Luftfahrzeuge UTM nach Anspruch 10 und die Netzvorrichtung nach Anspruch 11 umfasst.

13. Computerlesbares Speicherungsmedium mit Anweisungen, wobei, wenn die Anweisungen auf einem Computer laufen gelassen werden, der Computer dazu befähigt wird, das Verfahren nach einem der Ansprüche 1 bis 9 auszuführen.

## Revendications

1. Procédé de commande de véhicule aérien sans pilote, comprenant :
la détermination (S101) qu'un dispositif de commande (12) d'un véhicule aérien sans pilote, UAV, (11) doit être transféré ; et
l'envoi (S102), à un dispositif de réseau, d'un ordre d'hébergement pour le transfert du dispositif de commande de l'UAV (11),
**caractérisé en ce que**
le procédé est réalisé par un élément de réseau de gestion du trafic de véhicules aériens sans pilote, UTM, implanté dans un réseau de communications (2), l'élément de réseau UTM étant configuré pour gérer l'UAV (11) et le dispositif de commande (12) de l'UAV qui accèdent au réseau de communications (2) ; et
l'ordre d'hébergement est envoyé, par l'élément de réseau UTM, au dispositif de réseau pour permettre au dispositif de réseau d'indiquer, selon l'ordre d'hébergement, que l'UAV (11) doit transférer le dispositif de commande de l'UAV (11), l'ordre d'hébergement comprenant des informations concernant un dispositif de commande à transférer de l'UAV.

2. Procédé selon la revendication 1, le dispositif de réseau étant un élément de réseau de fonction de gestion de session correspondant à l'UAV.

3. Procédé selon la revendication 2, l'envoi (S102), par l'élément de réseau UTM, à un dispositif de réseau, d'un ordre d'hébergement comprenant :
l'envoi, par l'élément de réseau UTM, de l'ordre d'hébergement via un élément de réseau de fonction de contrôle des politiques afin d'indiquer que l'élément de réseau de fonction de gestion de session doit transférer le dispositif de commande de l'UAV.

4. Procédé selon l'une quelconque des revendications 1 à 3, le procédé comprenant en outre :
la réception par l'élément de réseau UTM, d'un message de demande d'hébergement depuis l'UAV, le message de demande d'hébergement étant utilisé pour demander le transfert du dispositif de commande de l'UAV ; et
la détermination, par l'élément de réseau UTM, qu'un dispositif de commande d'un UAV doit être transféré comprenant :
la détermination, par l'élément de réseau UTM sur la base du message de demande d'hébergement, que le dispositif de commande de l'UAV doit être transféré.

5. Procédé de commande de véhicule aérien sans pilote, comprenant :
la réception (S 102), par un dispositif de réseau, d'un ordre d'hébergement, le dispositif de réseau étant un élément de réseau de fonction de gestion de session ;
**caractérisé en ce que**
l'ordre d'hébergement est reçu, par le dispositif de réseau, depuis un élément de réseau de gestion du trafic de véhicules aériens sans pilote, UTM, configuré pour gérer un véhicule aérien sans pilote, UAV, (11) et un dispositif de commande (12) de l'UAV qui accèdent au réseau de communications (2), l'ordre d'hébergement visant le transfert du dispositif de commande (12) de l'UAV (11) ; et le procédé comprend en outre
l'indication (S103), par le dispositif de réseau, selon l'ordre d'hébergement, que l'UAV doit transférer le dispositif de commande d'un UAV indiqué par l'ordre d'hébergement,
l'ordre d'hébergement comprenant en outre des informations concernant un dispositif de commande à transférer de l'UAV.

6. Procédé selon la revendication 5,
l'ordre d'hébergement comprenant en outre des informations concernant un élément de réseau de fonction de plan utilisateur correspondant au dispositif de commande à transférer de l'UAV ; et les informations concernant l'élément de réseau de fonction de plan utilisateur correspondant au dispositif de commande à transférer de l'UAV étant utilisées par le dispositif de réseau pour déterminer l'élément de réseau de fonction de plan utilisateur correspondant au dispositif de commande à transférer de l'UAV.

7. Procédé selon la revendication 5 ou 6, l'indication, par le dispositif de réseau selon l'ordre d'hébergement, que l'UAV doit transférer le dispositif de commande de l'UAV comprenant :
l'envoi, par le dispositif de réseau, à l'UAV, d'un ordre de transfert selon l'ordre d'hébergement,
l'ordre de transfert étant utilisé pour indiquer que l'UAV doit transférer le dispositif de commande de l'UAV.

8. Procédé selon la revendication 7, l'ordre de transfert comprenant les informations d'indication utilisées pour le transfert du dispositif de commande de l'UAV et/ou les informations concernant le dispositif de commande à transférer de l'UAV.

9. Procédé selon l'une quelconque des revendications 5 à 8, le procédé comprenant en outre, après la réception, par un dispositif de réseau, d'un ordre d'hébergement :
la détermination, par le dispositif de réseau, d'informations de commande structurées selon l'ordre d'hébergement, et
l'envoi des informations de commande structurées à un élément de réseau de fonction de plan utilisateur correspondant à l'UAV,
les informations de commande structurées étant utilisées pour indiquer de changer, pour les informations concernant le dispositif de commande à transférer de l'UAV, les informations concernant le dispositif de commande de l'UAV dans une règle de détection et/ou une règle de réacheminement dans l'élément de réseau de fonction de plan utilisateur correspondant à l'UAV ; et/ou indiquer de changer, pour les informations concernant l'élément de réseau de fonction de plan utilisateur du dispositif de commande à transférer de l'UAV, des informations concernant un élément de réseau de fonction de plan utilisateur correspondant au dispositif de commande de l'UAV dans la règle de détection et/ou la règle de réacheminement dans l'élément de réseau de fonction de plan utilisateur correspondant à l'UAV.

10. Élément de réseau de gestion du trafic de véhicules aériens sans pilote, UTM, comprenant des moyens de mise en oeuvre des étapes du procédé selon l'une quelconque des revendications 1 à 4.

11. Dispositif de réseau, comprenant des moyens de mise en oeuvre des étapes du procédé selon l'une quelconque des revendications 5 à 8.

12. Système de commande de véhicule aérien sans pilote, comprenant l'élément de réseau de gestion du trafic de véhicules aériens sans pilote, UTM, selon la revendication 10 et le dispositif de réseau selon la revendication 11.

13. Support de stockage lisible par ordinateur, comprenant des instructions, l'exécution des instructions sur un ordinateur permettant à l'ordinateur de réaliser le procédé selon l'une quelconque des revendications 1 à 9.
